(19) Europäisches Patentamt
European Patent Office
Office européen des brevets

(11) **EP 4 060 307 A1**

(12) **EUROPEAN PATENT APPLICATION**

(43) Date of publication:
**21.09.2022  Bulletin 2022/38**

(21) Application number: **22162655.9**

(22) Date of filing: **17.03.2022**

(51) International Patent Classification (IPC):
**G01L 17/00** (2006.01)    **G01M 17/02** (2006.01)
**B60C 23/04** (2006.01)    **B60C 23/06** (2006.01)
**B60W 40/10** (2012.01)

(52) Cooperative Patent Classification (CPC):
**G01M 17/02; B60C 23/0479; B60C 23/064; B60W 40/1005; G01L 17/005**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **19.03.2021  US 202163163129 P**

(71) Applicant: **Sensata Technologies, Inc.**
**Attleboro, MA 02703 (US)**

(72) Inventor: **STEWART, WILLIAM**
**ATTLEBORO, 02703 (US)**

(74) Representative: **FRKelly**
**27 Clyde Road**
**Dublin D04 F838 (IE)**

(54) **ENHANCED METHOD AND SYSTEM TO ESTIMATE THE TIRE OPERATING EFFICIENCY AND RANGE OF AN ELECTRIC VEHICLE**

(57)    Methods, apparatuses, computer program products, systems for estimating a tire operating efficiency and range of an electric vehicle are disclosed. In a particular embodiment, a method includes determining a tire load parameter for a tire based in part on a tire deformation parameter generated by a tire mounted sensor (TMS); determining a coefficient of rolling resistance parameter for the tire based in part on a tire pressure measurement and a linear velocity measurement; and determining, based on the tire load parameter and the coefficient of rolling resistance parameter, a force of rolling resistance parameter for the tire.

FIG. 1A

**Description**

CROSS-REFERENCE TO RELATED APPLICATIONS

This application is a non-provisional application for patent entitled to a filing date and claiming the benefit of earlier-filed U.S. Provisional Patent Application Serial No. 63/163,129, filed March 19, 2021, the contents of which are incorporated herein by reference in their entirety.

BACKGROUND

Advances have been made in improving electric vehicle (EV) driving range, mitigating "range anxiety" for the end user. While much focus has been given to improving battery technology, controls, and vehicle aerodynamics, EV driving range is significantly affected by the vehicle tires, specifically the rolling resistance presented by each tire of a moving vehicle.

SUMMARY

Embodiments in accordance with the present disclosure are directed to estimating a tire operating efficiency and range of an electric vehicle. A tire mounted sensor (TMS) can provide a number of tire features useful in determining a force of rolling resistance while the vehicle is moving, and thus energy expended. For example, a tire deformation parameter (e.g., radial displacement or contact patch length) and a stiffness coefficient can be used to estimate tire load. The TMS may calculate the tire load itself or may provide tire parameters to another component (e.g., a vehicle control system) that calculates the tire load. The TMS can also measure tire pressure and/or linear velocity parameters useful in determining a coefficient of rolling resistance. The TMS may calculate the coefficient of rolling resistance itself or may provide tire parameters to another component that calculate the coefficient of rolling resistance. Having determined an estimated tire load and coefficient of rolling resistance, a force of rolling resistance can be determined, which may be used to estimate the energy consumption and/or operating efficiency of the tire. An estimated range for the electric vehicle can be derived from the estimated energy consumption or efficiency of the vehicle tires as well as other factors. Thus, using the vehicle rolling resistance as an input, improved techniques for determining the range of an electric vehicle are realized.

A particular embodiment is directed to a method of estimating a tire operating efficiency and range of an electric vehicle. The method includes determining a tire load parameter for a tire based in part on a tire deformation parameter generated by a tire mounted sensor (TMS). The method also includes determining a coefficient of rolling resistance parameter for the tire based in part on a tire pressure measurement and a linear velocity measurement. The method also includes determining, based on the tire load parameter and the coefficient of rolling resistance parameter, a force of rolling resistance parameter for the tire. In some examples, at least one of the tire pressure measurement and the linear velocity measurement is measured by the TMS.

Another particular embodiment is directed to an apparatus for estimating a tire operating efficiency and range of an electric vehicle. The apparatus includes a controller, a memory coupled to the controller where the memory is configured to store one or more tire parameters, and a wireless transceiver coupled to the controller. The controller is configured to determine a tire load parameter for a tire based in part on a tire deformation parameter generated by a tire mounted sensor (TMS). The controller is also configured to determine a coefficient of rolling resistance parameter for the tire based in part on a tire pressure measurement and a linear velocity measurement. The controller is also configured to determine, based on the tire load parameter and the coefficient of rolling resistance parameter, a force of rolling resistance parameter for the tire. In some examples, at least one of the tire pressure measurement and the linear velocity measurement is measured by the TMS.

Another particular embodiment is directed to a system for estimating a tire operating efficiency and range of an electric vehicle. The system includes a tire mounted sensor (TMS) and a vehicle control system (VCS). The TMS is configured to identify one or more tire parameters, where the one or more tire parameters include at least a tire load parameter and a tire pressure parameter. The TMS is also configured to transmit the one or more tire parameters over a wireless bidirectional communications link. The VCS is configured to receive the one or more tire parameters from the TMS over the wireless bidirectional communications link. The VCS is also configured to determine, based on the one or more tire parameters, a force of rolling resistance for a tire. The VCS is also configured to determine, based on the force or rolling resistance, an efficiency parameter indicative of at least one of an energy consumption for the tire and an operating efficiency of the tire. The VCS is also configured to estimate, based in part on the efficiency parameter, a range of an electric vehicle. In some examples, the one or more tire parameters further includes at least one of a tire dimension parameter, a tire stiffness parameter, and a linear velocity parameter.

The foregoing and other objects, features and advantages of the invention will be apparent from the following more particular descriptions of exemplary embodiments of the invention as illustrated in the accompanying drawings wherein like reference numbers generally represent like parts of exemplary embodiments of the invention.

BRIEF DESCRIPTION OF THE DRAWINGS

FIG. 1A sets forth an isometric diagram of a system for estimating a tire operating efficiency and range of an electric vehicle in accordance with the present disclosure;

FIG. 1B sets forth a top view of the system of FIG. 1A;

FIG. 2 illustrates a reference diagram of a tire in accordance with the present disclosure;

FIG. 3A illustrates a block diagram of an exemplary tire mounted sensor (TMS) in accordance with the present disclosure;

FIG. 3B illustrates tire features that may be measured using a TMS in accordance with the present disclosure;

FIG. 3C illustrates an example raw accelerometric waveform;

FIG. 3D illustrates an example processed accelerometric waveform;

FIG. 4 illustrates a block diagram of an exemplary vehicle control system (VCS) in accordance with the present disclosure;

FIG. 5A illustrates a block diagram of an exemplary Telematics Control Unit (TCU) in accordance with the present disclosure;

FIG. 5B illustrates block diagram of an exemplary smart device in accordance with the present disclosure;

FIG. 6 illustrates a block diagram of an exemplary TMS in accordance with the present disclosure;

FIG. 7 sets forth a flowchart of an example method for estimating a tire operating efficiency and range of an electric vehicle in accordance with the present disclosure;

FIG. 8 sets forth a flowchart of another example method for estimating a tire operating efficiency and range of an electric vehicle in accordance with the present disclosure;

FIG. 9 sets forth a flowchart of another example method for estimating a tire operating efficiency and range of an electric vehicle in accordance with the present disclosure; and

FIG. 10 sets forth a flowchart of another example method for estimating a tire operating efficiency and range of an electric vehicle in accordance with the present disclosure.

DETAILED DESCRIPTION

The terminology used herein for the purpose of describing particular examples is not intended to be limiting for further examples. Whenever a singular form such as "a", "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises", "comprising", "includes" and/or "including", when used, specify the presence of the stated features, integers, steps, operations, processes, acts, elements and/or components, but do not preclude the presence or addition of one or more other features, integers, steps, operations, processes, acts, elements, components and/or any group thereof.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B, as well as A and B. An alternative wording for the same combinations is "at least one of A and B". The same applies for combinations of more than two elements.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

In addition to vehicle aerodynamics, driving style, and driving terrain, tire rolling resistance is a key contributor that impacts the driving range of a moving vehicle. In one estimate, rolling resistance accounts for 20-30% of energy consumption. As used herein, rolling resistance is the force in opposite direction of the rolling tire that makes the tire less efficient. Tire rolling resistance is defined as the force required to maintain the forward movement of a loaded pneumatic tire in a straight line at a constant speed. It is caused by the natural viscoelastic properties of rubber along with the tire's internal components constantly bending, stretching and recovering (hysteresis) as they cycle between their loaded (where the tire footprint contacts against the road) and unloaded states. Tire rolling resistance has a significant impact on the range of an electric vehicle, and the wrong tires (or under-inflated or overloaded tires) can drastically reduce this range. This can impact how deeply the battery pack is discharged. Excessive cycling causes wear on the batteries and this too can reduce the range and battery lifespan. Thus, proper tire use and maintenance are critical for both the range on any given trip and the longevity of an electric vehicle.

The energy expended/consumed by a tire ($E_t$) can be expressed as the product of the force of rolling resistance ($F_{RR}$) and the distance covered ($d$), or as shown in Equation 1:

$$E_t = F_{RR} \times d \qquad \text{(Equation 1)}$$

The rolling resistance force ($F_{RR}$) of a tire can be expressed as the product of the normal force or load applied to the tire ($F_Z$) and the coefficient of rolling resistance ($C_{RR}$), or as shown in Equation 2:

$$F_{RR} = F_Z \times C_{RR} \qquad \text{(Equation 2)}$$

It should be noted that the rolling resistance coefficient, $C_{RR}$, is influenced by different variables like tire structure, profile, materials, and the rolling surface. Tire manufacturers typically quote a tire's coefficient of rolling resistance at a prescribed pressure and load for the purpose of comparing tires. However, pressure and loads vary due to over/under inflation and load/cargo variance in real-world situations, which can cause the rolling resistance coefficient to vary as well. The estimation of the rolling resistance coefficient requires specific data/coefficients from the manufacturer - typically expressed in kg/ton. For example, a tire with a rolling resistance coefficient of 10kg/t is the equivalent of a car which is permanently climbing a slope with a 1% gradient. However, aside from the tire manufacture supplied information, the key contributors to a tire's coefficient of rolling resistance are tire pressure and vehicle velocity. For example, the typical rolling resistance coefficient for a pneumatic tire on a dry road can be estimated by a characteristic polynomial equation, as a function of tire pressure ($p$) and linear velocity ($v$), such as the following:

$$C_{RR} = 0.005 + (1/p)(0.01 + 0.0095 \, (v/100)^2) \qquad \text{(Equation 3)}$$

Different road surfaces may also generate a different value for $C_{RR}$.

As will be described in more detail below, a tire mounted sensor (TMS) can provide parameters, measurements, and other data useful in determining the force of rolling resistance and the energy expenditure of the tire. A TMS can directly measure the tire pressure using an integrated pressure sensor as in existing valve mounted tire pressure monitoring sensors. A TMS can determine a tire load using an integrated radial or tangential accelerometer, and having access to tire stiffness coefficients (e.g., programmed into the TMS at tire installation and derived during tire characterization), to estimate the vertical load on any pneumatic tire. To be used as an input, this can be provided as an actual estimated load or as a value of tire deformation (radial or contact patch length) with tire stiffness coefficients. The TMS can estimate the tire load by determining the degree of tire deformation (radial displacement or contact patch length) and proportioning the degree of deformation due to pressure (measured) and amount due to tire load using the tire stiffness coefficient values. A TMS can determine vehicle/tire velocity from measuring the tire's angular velocity and knowing its radius (programmed into the TMS at tire installation) derived during tire characterization. Tire dimension characteristics, such as diameter, radius, or circumference, may be programmed into the TMS at tire installation. Other contributing factors may include tire specific contributors to rolling resistance (tire coefficients data) from the tire manufacturer derived during tire design and/or characterization and programmed into the TMS at tire installation, as well as slip angle and road surface conditions that can be derived using tire and vehicle-based systems.

As will be described in more detail below, a TMS may provide one or more tire parameters related to rolling resistance - such as tire pressure, tire velocity, tire deformation, tire stiffness, tire dimensions, tire load, a coefficient of rolling resistance, a force of rolling resistance, or an energy expenditure estimate - to another component for estimating the range of the electric vehicle.

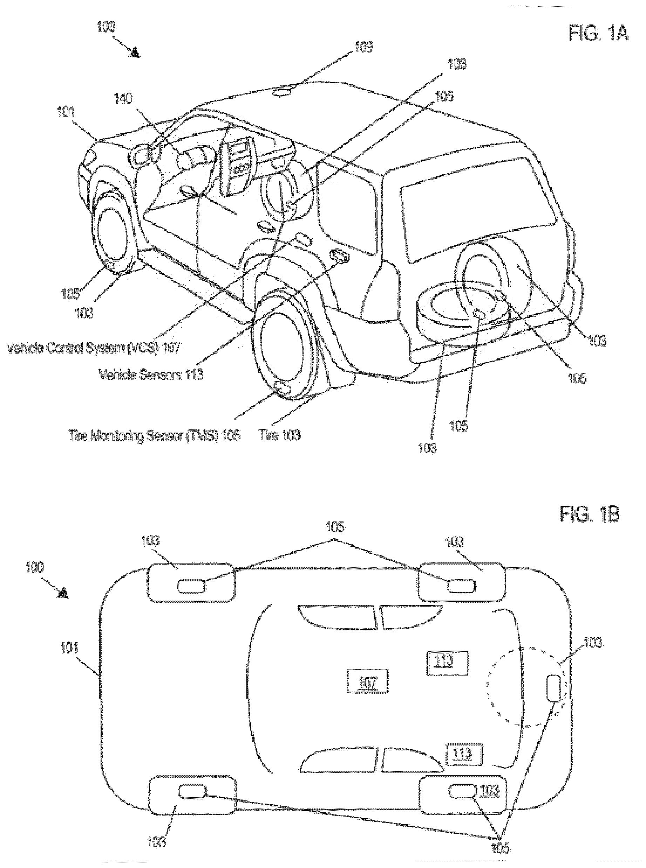

Exemplary methods, apparatuses, and computer program products for estimating a tire operating efficiency and range of an electric vehicle in accordance with the present disclosure are described with reference to the accompanying drawings, beginning with FIG. 1A. FIG. 1A sets forth an isometric diagram of a system 100 for estimating a tire operating efficiency and range of an electric vehicle in accordance with the present disclosure. FIG. 1B sets forth a top view of the system of FIG. 1A. The system of FIG. 1A includes a vehicle 101 equipped with tires 103 that include tire monitoring sensor (TMS) 105. A TMS is a sensor that is configured to monitor and transmit parameters of a tire. According to embodiments of the present disclosure, a TMS may be coupled to some portion of the tire (e.g., mounted to an inner portion of the tire). In at least one embodiment, the TMS may be coupled to a valve stem of the tire. As will be explained in greater detail below, a TMS may transmit tire parameters to a receiver of a tire pressure monitoring system (TPMS).

The vehicle of FIG. 1A further includes a vehicle control system (VCS) 107 that controls various components and systems within a vehicle. In a particular embodiment, the VCS 107 includes a plurality of electronic control units (ECUs) that are configured to control one or more vehicle subsystems. Commonly referred to as the vehicle's "computers", an ECU may be a central control unit or may refer collectively to one or more vehicle subsystem control units, such as an Engine Control Module (ECM), a Powertrain Control Module (PCM), a Transmission Control Module (TCM), a Brake Control Module (BCM), a Central Timing Module (CTM), a General Electronic Module (GEM), or a Suspension Control Module (SCM). In an embodiment according to the present disclosure, the VCS 107 includes a BCM that includes an Antilock Braking System (ABS) and an Electronic Stability Program (ESP). Alternatively, the VCS 107 may comprise a Telematics Control Unit (TCU) independent of vehicle-based sensors (e.g., an aftermarket system). In the example of FIG. 1A, the vehicle 101 includes a dashboard display screen 140 for displaying messages from the VCS 107. For example, the VCS 107 may send a 'low tire pressure' message to a component connected to the dashboard display screen 140. In this example, in response to receiving the 'low tire pressure' message, the component may turn on a 'low tire pressure' indicator that is displayed on the dashboard display screen 140.

Each TMS 105 may be equipped with a wireless transceiver for bidirectional wireless communication with the VCS 107, as will be described in more detail below. The VCS is similarly equipped with a wireless transceiver for bidirectional wireless communication with each of the TMSs 105, as will be described in more detail below. The bidirectional wireless communication may be realized by low power communication technology such as Bluetooth Low Energy or other low power bidirectional communication technology that is intended to conserve the amount of energy consumed. Alternatively, each TMS 105 may include a unidirectional transmitter configured to transmit signals to the VCS 107. In some embodiments, each TMS 105 may communicate directly with a smart device (not shown), such as a smart phone, tablet, or diagnostic tool, as will be described in more detail below.

Each vehicle system may include sensors 113 used to measure and communicate vehicle operating conditions. For example, the ABS may include wheel speed sensors on the wheelbase used to measure wheel speed. The ESP subsystem may include yaw rate sensors configured to measure the yaw-induced acceleration of the vehicle when the vehicle is maneuvering a curve. Readings from such sensors 113 may be provided to the VCS 107, which may provide parameters based on these readings to the TMS 105.

The vehicle 101 may further include a transceiver 109 communicatively coupled to the VCS 107 for cellular terrestrial communication, satellite communication, or both.

The arrangement of devices making up the exemplary system illustrated in FIGS. 1A and 1B are for explanation, not for limitation. Data processing systems useful according to various embodiments of the present disclosure may include additional servers, routers, other devices, and peer-to-peer architectures, not shown in FIGS. 1A and 1B, as will occur to those of skill in the art. Networks in such data processing systems may support many data communications protocols, including for example TCP (Transmission Control Protocol), IP (Internet Protocol), Bluetooth protocol, Near Field Communication, Controller Area Network (CAN) protocol, Local Interconnect Network (LIN) protocol, FlexRay protocol, and others as will occur to those of skill in the art. Various embodiments of the present disclosure may be implemented on a variety of hardware platforms in addition to those illustrated in FIGS. 1A and 1B.

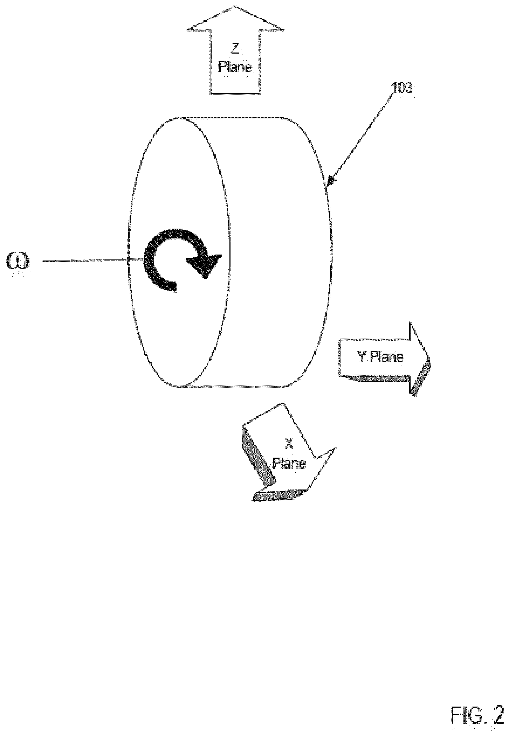

FIG. 2 illustrates a reference diagram of a tire 103 in accordance with the present disclosure. As used in this disclosure, the z-axis of the tire 103 is the direction of radial force during rotation, the y-axis of the tire is the direction of lateral force during rotation, and the x-axis of the tire 103 is the direction of tangential force during rotation. The angular speed of rotation, in radians, is represented by co, and is also referred to herein as wheel speed.

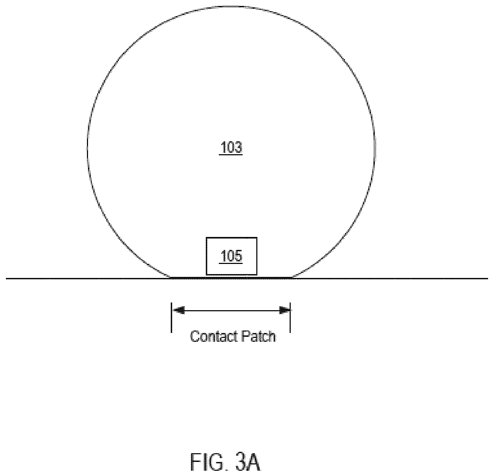

FIG. 3A illustrates a block diagram of an exemplary tire mounted sensor (TMS) 105 in accordance with the present disclosure. Typically, the TMS 105 is mounted on, or otherwise coupled to, an internal surface of the tire 103, specifically on the inside of the tread rather than the side wall. As the tire 103 rotates, the portion that engages with the road surface at any given time is flattened. The flattened portion is known as the tire footprint or, interchangeably, contact patch. One or more features of the tire 103, in particular the length of the contact patch (typically measured in the direction of travel of the vehicle), may be used, for example, as an indication of the load on the tire 103. Electrical signals produced by the TMS 105 can be used to measure the contact patch, in particular its length, as will be described in more detail below. It will be understood that one or more of the tires 103 of the vehicle 101 may each include a TMS 105 for providing one or more target signals in respect of which pulse width measuring is performed.

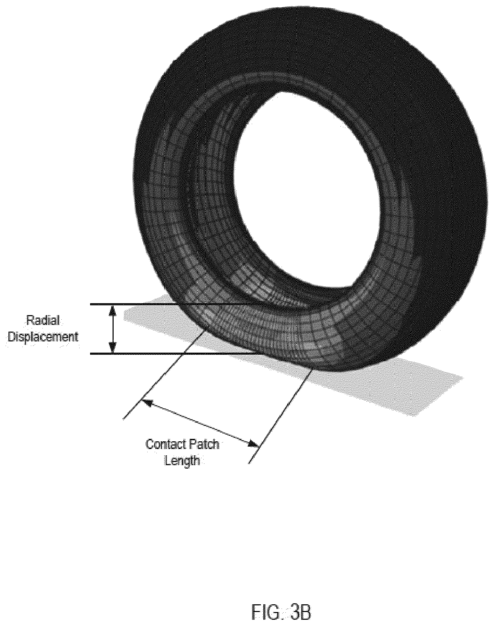

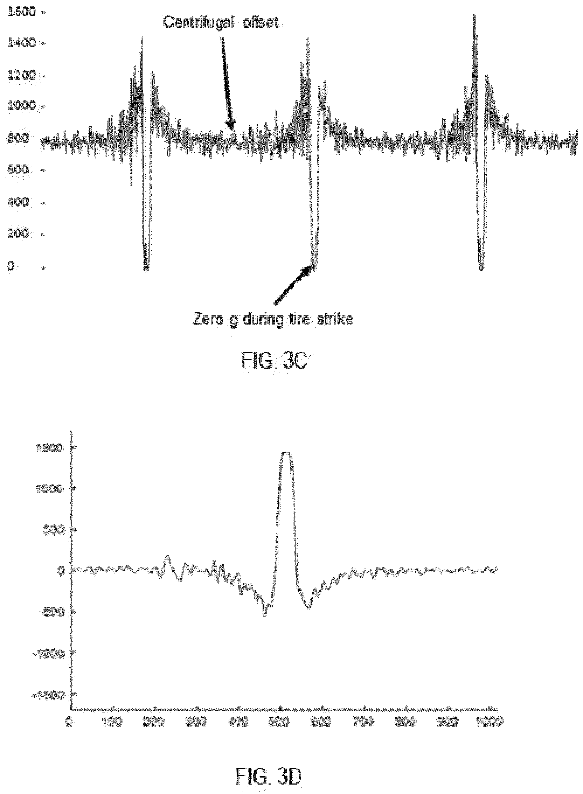

FIG. 3B illustrates tire features that may be measured using a TMS in accordance with the present disclosure. Two tire features that are indicative of tire load are contact patch length and radial displacement, as illustrated in FIG. 3B. Radial acceleration is measured using the TMS 105, which may be equipped with an accelerometer, an acceleration sensor, an accelerometric device, a shock sensor, a force sensor, a microelectromechanical systems (MEMS) sensor, or other devices that are similarly responsive to acceleration magnitude and/or to changes in acceleration. For example, an accelerometer senses acceleration in the radial plane (z-plane) (see FIG. 2). As illustrated in FIG. 3C, the characteristic of the accelerometric waveform exhibits a centrifugal offset and region where the magnitude momentarily drops to zero during the time when the zone where the sensor is mounted is at tire/ground contact position. This measurement is repeated for rotations of the tire. The radial acceleration signal is then conditioned to make processing easier by isolating each strike in the acceleration profile, low-pass filtering the waveform, inverting the waveform, and normalizing the waveform for speed, the result of which is shown in FIG. 3D.

Returning to FIG. 3B, contact patch length (CPL) and peak radial displacement (PRD) are two tire features useful in determining the tire load. Both CPL and PRD are influenced by tire load and pressure, and, accordingly, tires may be characterized by comparing the magnitude of CPL or PRD with varying pressure and load. Characteristic equations may be stored, for example, in the TMS 105 of FIG. 1A or in the vehicle control unit 107 of FIG. 1A. CPL may be estimated by measuring the time at which the radial acceleration is returning to and is at zero g. This time is then expressed as a quotient/ratio of the time for a complete rotation, and the CPL is derived from its ratio of the known tire circumference. In order to determine the PRD, the radial accelerometric signal is integrated twice with respect to time. For load estimation, either of these two methods can be used independently.

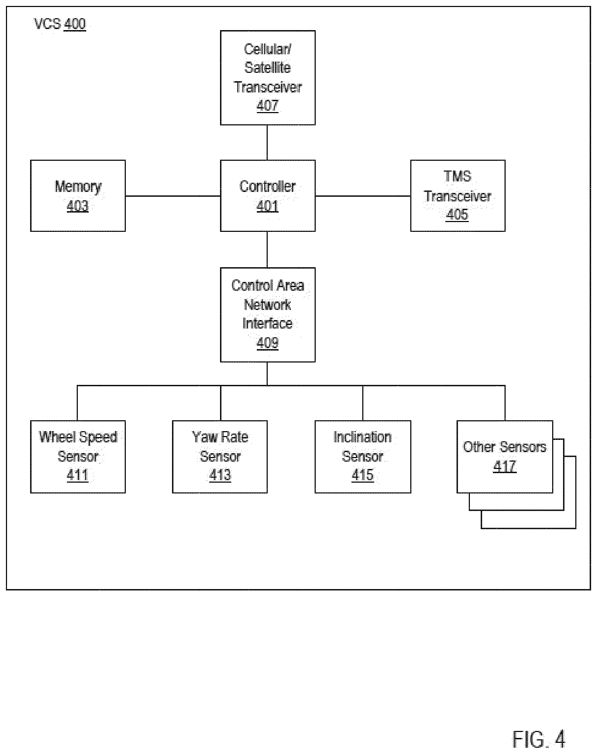

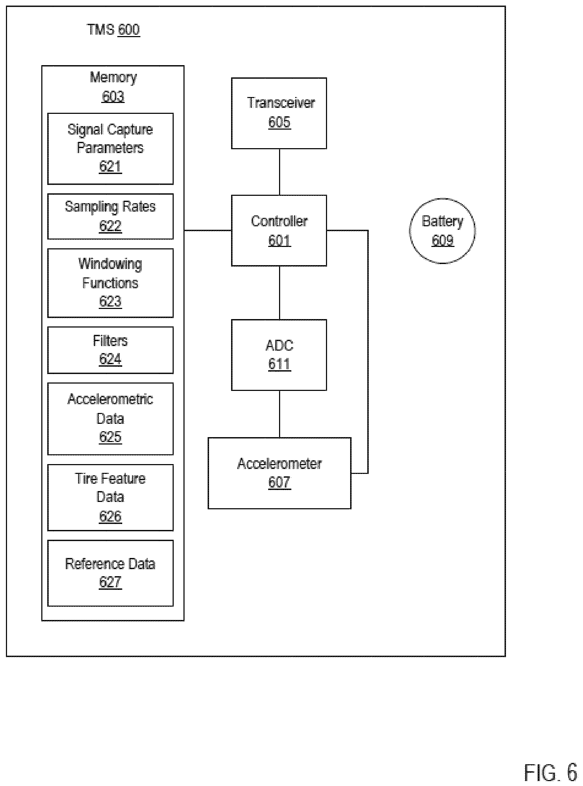

For further explanation, FIG. 4 sets forth a diagram of an exemplary vehicle control system (VCS) 400 for estimating a tire operating efficiency and range of an electric vehicle according to embodiments of the present disclosure. The VCS 400 includes a controller 401 coupled to a memory 403. The controller 401 is configured to obtain sensor readings related to vehicle operating conditions, as well as data from sources external to the vehicle, and provide configuration parameters to a TMS, such as TMS 600 (see FIG. 6). The controller may include or implement a microcontroller, an Application Specific Integrated Circuit (ASIC), a general purpose processor, a digital signal processor (DSP), a programmable logic array (PLA) such as a field programmable gate array (FPGA), or other data computation unit in accordance with the present disclosure. The sensor readings and data, as well as tire feature data received from the TMS, may be stored in the memory 403. The memory 403 may be a non-volatile memory such as flash memory. For example, the VCS 400 may obtain vehicle operating condition data, such as sensor readings from sensors on-board the vehicle.

For bidirectional wireless communication with a TMS, the VCS 400 includes a TMS transceiver 405 coupled to the controller 401. In one embodiment, the TMS transceiver 405 is a Bluetooth Low Energy transmitter-receiver. In other embodiments, the TMS transceiver 405 may be other types of low power radio frequency communication technology that is intended to conserve energy consumed in the TMS. The VCS 400 may further include a transceiver 407 for cellular terrestrial communication, satellite communication, or both.

The VCS 400 may further comprise a controller area network (CAN) interface 409 for communicatively coupling vehicle sensors and devices to the controller 401. Of particular relevance to the present disclosure, the CAN interface 409 couples a wheel speed sensor 411, a yaw rate sensor 413, an inclination sensor 415, and other sensors 417, to the controller 401. The wheel speed sensor 411 measures the rotational angular speed of the wheel, e.g., in radians per second. The yaw rate sensor 413 may be used to measure the yaw-induced acceleration of the vehicle, for example, when the vehicle is maneuvering a curve, which will influence the magnitude of loading on each tire. The yaw rate sensor 413 may also provide information on the shear forces on the tire where it contacts the road. The inclination sensor 415 may detect longitudinal and/or transverse inclination of the vehicle. The wheel speed sensor 411, the yaw rate sensor 413, and the inclination sensor 415 transmit respective readings to the controller 401.

In some embodiments, the controller 401 is configured to determine a tire load parameter for a tire based in part on a tire deformation parameter generated by a TMS; determine a coefficient of rolling resistance parameter for the tire based in part on a tire pressure measurement and a linear velocity measurement; and determine, based on the tire load parameter and the coefficient of rolling resistance parameter, a force of rolling resistance parameter for the tire. Logic for determining a tire load parameter for a tire based in part on a tire deformation parameter generated by a TMS; determining a coefficient of rolling resistance parameter for the tire based in part on a tire pressure measurement and a linear velocity measurement; and determining, based on the tire load parameter and the coefficient of rolling resistance parameter, a force of rolling resistance parameter for the tire may be embedded in logic blocks of the controller 401 or stored as a set of executable instructions in the memory of the VCS 400. In some examples, the controller is further configured to determine, based on the force of rolling resistance parameter, an energy consumption parameter for the tire. In some examples, the controller is further configured to estimate, based on at least the energy consumption parameter and a battery charge value, a range for an electric vehicle. In some examples, the controller is further configured to signal an alert based on the energy consumption parameter for the tire.

In some embodiments, the controller is configured to receive one or more tire parameter related to rolling resistance from a TMS, for example, over a wireless bidirectional communications link such as a Bluetooth protocol link. In some examples, the one or more parameters can include a force of rolling resistance parameter, an energy consumption parameter based on the force of rolling resistance, a tire load parameter useful in calculating the force of rolling resistance, and/or a coefficient of rolling resistance parameter. The one or more parameters may also include other parameters that contribute to the force of rolling resistance, such as a tire deformation parameter (e.g., contact patch length or peak radial displacement), a tire pressure parameter, a tire stiffness parameter, a tire velocity parameter, and/or a tire dimension parameter (e.g., radius, diameter, or circumference). In association with the one or more parameters, the controller may be further configured to receive identification information such as a TMS identifier or tire identification data.

In some examples, to receive the rolling resistance parameters the controller 401 may request the rolling resistance parameters by polling the TMS or sending a message requesting the rolling resistance parameters. The controller 401 may also prompt the TMS to provide the data in response to a wake-up signal. Further, the controller 401 may receive the data from the TMS as part of an unsolicited broadcast of rolling resistance parameters. In some embodiments, the controller may detect a reporting event that prompts the controller 401 to request rolling resistance parameters from the TMS. For example, the event may be the detection of a change in vehicle or tire operating characteristics, such as a change in speed or tire pressure. The event may also be the detection that a particular amount of time has passed or that a particular distance has been traveled since rolling resistance parameters were last received. In response to the event, the controller 401 may first establish that the vehicle is operating in a steady state condition before requesting the rolling resistance parameters from the TMS. For example, the steady state condition be that vehicle speed and acceleration are nearly constant, that a vehicle speed threshold has been met, that the vehicle is not maneuvering a corner, that the vehicle is not at an incline, and/or that tire temperature and pressure are constant. Once it is determined that a steady state has been achieved, the controller 401 may poll the TMS for the rolling resistance parameters.

In some examples, the controller 401 is configured to identify an efficiency parameter indicative of at least one of an energy consumption for a tire and an operating efficiency of the tire. In some implementations, the controller 401 identifies the efficiency parameter of a tire by receiving at least one of an energy consumption parameter and a tire operating efficiency parameter from the TMS of that tire along with a TMS identifier. In other implementations, the controller 401 identifies the efficiency parameter by calculating the energy consumption, for example, using Equation 1. In such an example, the controller 401 calculates the energy consumption of the tire as the product of a force of rolling resistance on the tire and a distance travelled by the tire. For example, the distance travelled by the tire may be based on a distance parameter received from the TMS, based on a vehicle speed derived from vehicle-based sensors such as a wheel speed sensor, or based on GPS doppler data obtained from the cellular/satellite transceiver 407 or from another position tracking data source. In yet other implementations, the controller 401 determines the efficiency parameter by calculating a tire operating efficiency as a ratio of an expected tire operating parameters to actual tire operating parameter values that are measured or estimated as discussed above. The reference values for calculating tire efficiency may be obtained from the TMS or retrieved from a remote server or cloud-based information service using tire identification data received from the TMS

In some examples, the controller 401 is configured to identify a force of rolling resistance parameter for each tire. In some implementations, the controller 401 identifies the force of rolling resistance parameter of a tire by receiving the force of rolling resistance parameter from the TMS of that tire along with a TMS identifier. In other implementations, the controller 401 identifies the force of rolling resistance parameter of a tire by calculating the force of rolling resistance, for example, using Equation 2. In such an example, the controller 401 calculates the product of tire load and a coefficient of rolling resistance.

In some examples, the controller 401 is configured to identify a tire load parameter for each tire for calculating the force of rolling resistance. In some implementations, the controller 401 identifies the tire load parameter of a tire by receiving the tire load parameter from the TMS of that tire along with a TMS identifier. In other implementations, the controller 401 identifies the tire load parameter of a tire by receiving the tire load parameter from one or more tire load sensors mounted to the vehicle. In yet other implementations, the controller 401 identifies the tire load parameter of a tire by calculating a driving tire load using a tire load characteristic equation. In these implementations, the controller 401 calculates the tire load based on inputs to the tire load characteristic equation including, for example, a tire deformation parameter (e.g., contact patch length or peak radial displacement), a tire stiffness parameter, a tire pressure parameter, a tire temperature parameter, and tire dimension data (e.g., radius, diameter, or circumference). In these implementations, the tire deformation parameter is received from the TMS. The tire pressure parameter may also be received from the TMS, or may be received from a valve-mounted tire pressure monitoring sensor. The tire temperature parameter may also be received from the TMS, or may be received from a valve-mounted tire pressure monitoring sensor. The tire dimension data may also be received from the TMS (e.g., programmed into the TMS at manufacture), or may be retrieved from a remote server using tire identification data received from the TMS. The tire stiffness parameter may also be received from the TMS (e.g., programmed into the TMS at manufacture), or may be retrieved from a remote server using tire identification data received from the TMS.

In some examples, the load on the tire may be further determined based on a load error factor to compensate for a tire load parameter derived from a tire load characteristic equation. The load error factor may be calculated using one or more other characteristic equations based on drive time, number of tire rotations since vehicle start or a lifetime of the tire, the temperature of the tire, etc. The load error factor may then be applied to the previously derived tire load parameter to determine a more accurately calculated load value.

In some examples, the controller 401 is configured to estimate a tire load parameter based on an effective rolling radius of the tire. The controller 401 may be configured to calculate the rolling radius of the tire as a ratio of the linear velocity of the wheel center to the angular velocity of the wheel. The linear velocity of the wheel center may be based on Global Positioning System (GPS) doppler data. The angular velocity of the wheel may be based on data from a wheel speed sensor 411 or a TMS. For example, the wheel speed sensor 411 may be a component of an Antilock Braking System (ABS). The controller 401 may then calculate the rolling radius of the tire based on the data indicating the linear velocity of the wheel and the angular velocity of the wheel. The difference between a static radius of the tire and the rolling radius represents the peak radial displacement. The static radius of the tire may be obtained from the TMS, from a remote server using tire identification data obtained from the TMS, or through previous measurements of the tire radius or circumference based on a rotational time period of the tire and linear velocity, with or without compensation for tread wear.

In some examples, the controller 401 is configured to identify a coefficient of rolling resistance parameter for each tire, which is useful in calculating the force of rolling resistance. In some implementations, the controller 401 identifies the coefficient of rolling resistance parameter of a tire by receiving the coefficient of rolling resistance parameter from the TMS of that tire along with a TMS identifier. In other implementations, the controller 401 identifies the coefficient of rolling resistance parameter of a tire by calculating a driving coefficient of rolling resistance using a characteristic equation such as, for example, Equation 3. In these implementations, the coefficient of rolling resistance is calculated using the characteristic equation with linear velocity of the tire and tire pressure as inputs. In some examples, the tire pressure parameter may be received from the TMS, or may be received from a valve-mounted tire pressure monitoring sensor. The linear velocity parameter may also be received from the TMS, or may be determined from vehicle-based sensors, or may be based on GPS doppler data obtained from the cellular/satellite transceiver 407 or from another position tracking data source. In some examples, the VCS 400 stores multiple characteristic equations for the tire corresponding to different road conditions. For example, the controller 401 may use one characteristic equation for dry surfaces and another for wet surfaces (e.g., based on operation of the windshield wipers). In some examples, the VCS 400 retrieves one or more characteristic equations for the coefficient of rolling resistance of the tire from a remote server based on tire identification data received from the TMS.

Given the energy consumption of each tire as determined from the above, the contribution of the tires to the energy drain on the battery pack of the electric vehicle can be estimated. Thus, in some embodiments, the controller 401 is further configured to estimate a range for the electric vehicle based in part on the energy consumption of the tires due to rolling resistance. In these embodiments, the force of rolling resistance can be combined with measurements or estimates for vehicle drag and internal friction to determine a total energy utilization required under the instant operating conditions. In some examples, the VCS 400 receives data from the battery pack or individual cells indicating a stored charge in the battery cells. Based on the amount of energy expended to travel a fixed distance under the instance operating condition and based on the amount of available energy in the battery pack, a driving range can be determined by the VCS 400. In some implementations, the VCS 400 is further configured to alert the driver when a tire is consuming more energy than other tires or is consuming more than a threshold amount of energy. For example, the VCS 400 may illuminate a symbol on the instrument panel, sound an audible alarm, display a warning on the vehicle display, or send a message to a user through a connected smart device, or a messaging platform such as text message, email, or the like. In some implementations, the controller 401 is configured to suggest changing the tire pressure/load to enhance tire/vehicle efficiency. For example, the controller 401 may provide information on a vehicle display, or send a message to a user through a connected smart device or messaging platform, indicating the efficiency can be improved by changing the tire pressure or tire load. In some implementations, the controller 401 is configured to determine a tire and/or vehicle operational efficiency rating. For example, the controller 401 may provide an efficiency rating on a vehicle display or in a message sent to a user through a connected smart device or messaging platform.

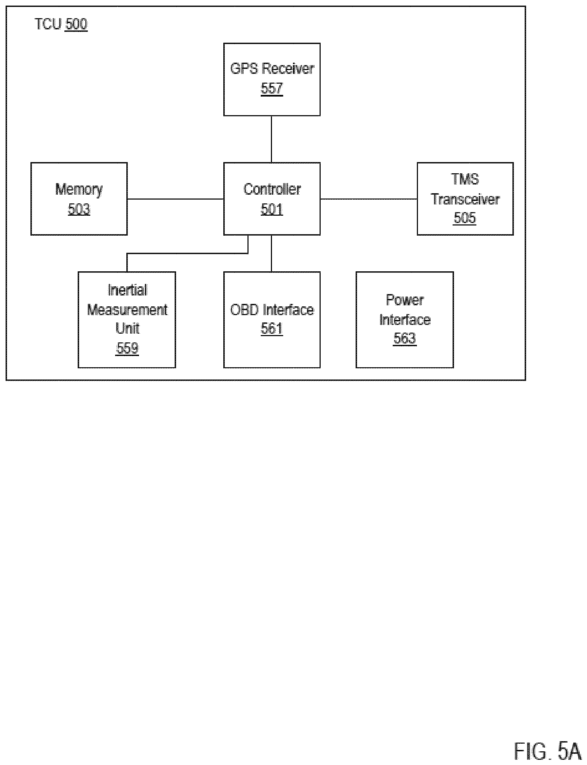

For further explanation, FIG. 5A sets forth a diagram of an embodiment of a Telematics Control Unit (TCU) 500 (e.g., an aftermarket system not directly coupled to vehicle-based sensors). The TCU 500 of FIG. 5A includes a controller 501, memory 503, and TMS transceiver 505 performing similar functions as described above with respect to the VCS 400 Figure 4. The TCU 500 also includes a Global Positioning System (GPS) receiver 557 configured to communicate with one or more GPS satellites to determine a vehicle location, speed, direction of movement, etc. The TCU 500 also includes an inertial measurement unit (IMU) 559 configured to measures a vehicle's specific force, angular rate, and/or orientation using a combination of accelerometers, gyroscopes, and/or magnetometers. The TCU 500 also includes an on-board diagnostics (OBD) interface 561 for coupling the TCU 500 to one or more on-board diagnostic devices of a vehicle. The TCU 500 may receive power via a power interface 563 couplable to a vehicle power bus.

In a particular embodiment, the controller 501 of the TCU 500 may be configured like the controller 401 of the VCS 400 of FIG. 4 to determine rolling resistance parameters, even though the TCU 500 may not have access to other vehicle subsystems through the CAN interface 409 of the VCS 400. Thus, the controller 501 of the TCU 500 may also be configured to receive one or more tire parameters related to rolling resistance from a TMS. The one or more parameters may include one or more of a tire pressure parameter, a linear velocity parameter, a tire deformation parameter, a tire stiffness parameter, a tire load parameter, a coefficient of rolling resistance parameter, a force of rolling resistance parameter, and an efficiency parameter indicative of at least one of an energy consumption for the tire and an operating efficiency of the tire. The controller 501 may also be configured to receive tire characteristics data from the TMS, such as one or more of tire dimension data, tire mass data, slip angle, tire identification data, and TMS identifier data. The controller 501 may also be configured to retrieve tire characteristics data from a remote server or cloud-based information service using tire identification.

In some examples, the controller 501 may be configured to determine a tire load parameter for a tire based in part on a tire deformation parameter generated by a TMS; determine a coefficient of rolling resistance parameter for the tire based in part on a tire pressure measurement and a linear velocity measurement; and determine, based on the tire load parameter and the coefficient of rolling resistance parameter, a force of rolling resistance parameter for the tire. In some examples, the controller 501 is further configured to determine, based on the force of rolling resistance parameter, an energy consumption parameter for the tire. In some examples, the controller 501 is further configured to estimate, based on at least the energy consumption parameter and a battery charge value, a range for an electric vehicle. In some examples, the controller 501 is further configured to signal an alert based on the energy consumption parameter for the tire. In some implementations, the controller 501 is configured to suggest changing the tire pressure/load to enhance tire/vehicle efficiency. For example, the controller 501 may provide information on a vehicle display, or send a message to a user through a connected smart device or messaging platform, indicating the efficiency can be improved by changing the tire pressure or tire load. In some implementations, the controller 501 is configured to determine a tire and/or vehicle operational efficiency rating. For example, the controller 501 may provide an efficiency rating on a vehicle display or in a message sent to a user through a connected smart device or messaging platform. To carry out these steps, the controller 501 may include or implement a processor configured to execute stored computer-executable instructions or an ASIC configured with embedded logic.

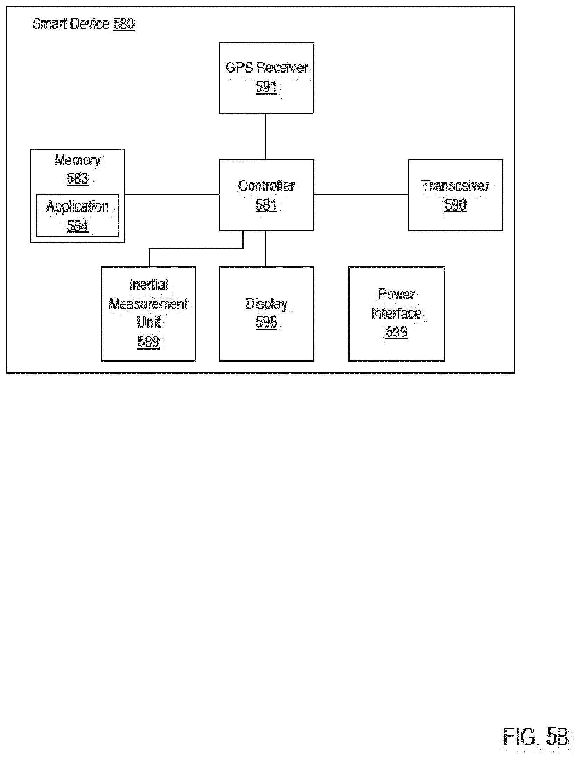

For further explanation, FIG. 5B sets forth a diagram of an embodiment of a smart device 580 (e.g., a smart phone or a tablet physically detached from the vehicle). The smart device 580 of FIG. 5B includes a controller 581, memory 583, and a transceiver 590 (e.g., a Bluetooth transceiver). For example, the transceiver 590 is configured to communicate with the TMS and/or the VCS. The smart device 580 also includes a Global Positioning System (GPS) receiver 591 configured to communicate with one or more GPS satellites in order to determine a vehicle location, speed, direction of movement, etc. The smart device 580 also includes an inertial measurement unit (IMU) 589 configured to measures the device's specific force, angular rate, and/or orientation using a combination of accelerometers, gyroscopes, and/or magnetometers. The smart device 580 also includes a display 598 that displays, for example, an energy consumption value associated with a tire. The smart device 580 may receive power from a power interface 599 couplable to a battery or to a vehicle power source.

In a particular embodiment, the controller 581 of the smart device 580 may be configured like the controller 401 of the VCS 400 of FIG. 4 to determine rolling resistance parameters and/or an energy expenditure of a tire, as well as a vehicle range, even though the smart device 580 may not have access to vehicle subsystems through the CAN interface 409 of the VCS 400. Thus, the controller 581 of the smart device 580 may also be configured to receive one or more tire parameters related to rolling resistance from a TMS. The one or more parameters may include one or more of a tire pressure parameter, a linear velocity parameter, a tire deformation parameter, a tire stiffness parameter, a tire load parameter, a coefficient of rolling resistance parameter, a force of rolling resistance parameter, and an energy consumption parameter. The controller 581 may also be configured to receive tire characteristics data from the TMS, such as one or more of tire dimension data, tire mass data, slip angle, tire identification data, and TMS identifier data. The controller 581 may also be configured to retrieve tire characteristics data from a remote server or cloud-based information service using tire identification.

In a particular embodiment, the memory 583 stores an application 584 embodied in computer-readable instructions that, when executed by the controller 581 cause the controller 581 to determine a tire load parameter for a tire based in part on a tire deformation parameter generated by a TMS; determine a coefficient of rolling resistance parameter for the tire based in part on a tire pressure measurement and a linear velocity measurement; and determine, based on the tire load parameter and the coefficient of rolling resistance parameter, a force of rolling resistance parameter for the tire. In some examples, the controller 581 is further configured to determine, based on the force of rolling resistance parameter, an efficiency parameter indicative of at least one of energy consumption for the tire and an operating efficiency of the tire. In some examples, the controller 581 is further configured to estimate, based on at least the energy consumption parameter and a battery charge value, a range for an electric vehicle. In some examples, the controller 581 is further configured to signal an alert based on the energy consumption parameter for the tire. In some implementations, the controller 581 is configured to suggest changing the tire pressure/load to enhance tire/vehicle efficiency. For example, the controller 581 may provide information on a smart device display, or send a message to a user through a messaging platform, indicating the efficiency can be improved by changing the tire pressure or tire load. In some implementations, the controller 581 is configured to determine a tire and/or vehicle operational efficiency rating. For example, the controller 581 may provide an efficiency rating on a smart device display or in a message sent to a user through a messaging platform.

For further explanation, FIG. 6 sets forth a diagram of an exemplary tire monitoring sensor (TMS) 600 for determining tread depth according to embodiments of the present disclosure. The TMS 600 includes a controller 601. The controller 601 may include or implement a processor, an Application Specific Integrated Circuit (ASIC), a digital signal processor (DSP), a programmable logic array (PLA) such as a field programmable gate array (FPGA), or other data computation unit in accordance with the present disclosure.

The TMS 600 of FIG. 6 also includes a memory 603 coupled to the controller 601. The memory may store signal capture parameters 621 such as the particular number of revolutions to measure the rotational time period, which may be determined by the controller 601, programmed into the memory 603, or received from the VCS 400 or the TCU 500. The memory 603 may store a sampling rates table 622 of sampling rates at which the ADC 611 sampled accelerometric signals data from the accelerometer 607. The controller 601 may configure the ADC 611 in accordance with a stored sampling rate. The memory 603 may also store a windowing function table 623 of windowing functions for identifying a rotational period of the tire from accelerometric data. The memory 603 may also store a filter table 624 of filter frequency bands with which to filter an accelerometric waveform. The memory 603 may also store accelerometric data 625, including a raw digital signal sampled from the accelerometer 607 by the ADC 611 and a processed accelerometric waveform processed by the controller 601. The memory 603 may also store tire data 626, such as a TMS identifier, a tire identifier (e.g., manufacturer make and model), manufacturer specifications for tire dimension (e.g., radius, circumference, width, aspect ratio, tread depth), a tire stiffness parameter, a tire mass parameter, manufacturer data relating to the tire's coefficient of rolling resistance, and the like. The memory 603 may also store reference data 627 such as a reference circumference, a reference radius, and/or a reference tread depth received from the VCS 400 or the TCU 500 after an initial measurement of the tire when the tire is in a substantially original condition (i.e., when the tire is new).

For bidirectional wireless communication with the VCS 400, the TMS 600 of FIG. 6 includes a transceiver 605 coupled to the controller 601. In one embodiment, the transceiver 605 is a Bluetooth Low Energy transmitter-receiver. In other embodiments, the transceiver 605 may be other types of low energy bidirectional communication technology that is intended to conserve energy consumed in the TMS 600. The TMS 600 may transmit tire parameters related to rolling resistance or other tire parameters to the VCS 400 or TCU 500 via the transceiver 605. In an alternative embodiment, the TMS 600 includes a unidirectional transmitter configured to transmit data to the VCS 400 or the TCU 500.

The accelerometer 607 of FIG. 6 may also be an acceleration sensor, an accelerometric device, a shock sensor, a force sensor, a microelectromechanical systems (MEMs) sensor, or other device that is similarly responsive to acceleration magnitude and/or to changes in acceleration, such that a tire revolution may be determined from the time between detected ground strike events. For example, an accelerometer senses acceleration in the radial plane (z-plane), lateral plane (y-plane), and/or tangential plane (x-plane), and outputs an electric pulse signal responsive to sensed acceleration, including but not limited to signals indicative of ground strikes. In an embodiment, the accelerometer 607 is configurable with an accelerometer range, a wheel speed parameter, or other vehicle parameter provided by the VCS 400. For example, g-offset can be determined via wheel speed sensor or another vehicle parameter and used to capture and process signals faster. Accelerometers may have a selectable range of forces they can measure. These ranges can vary from $\pm 1g$ up to $\pm 700g$. An example range of an accelerometer is $\pm 200g$. The accelerometer range may be configured based on wheel speed, for example, $\pm 150g$ at a low speed, $\pm 250g$ at a medium speed, and $\pm 500g$ at a high speed. Typically, the smaller the range, the more sensitive the readings will be from the accelerometer.

The TMS 600 of FIG. 6 also includes an analog to digital converter (ADC) 611 that receives the electric pulse signals from the accelerometer 607 and sampled accelerometric signals them according to a sampling rate. The ADC 611 converts the raw analog signals received from the accelerometer 607 into a raw digital signal that is suitable for digital signal processing.

The TMS 600 of FIG. 6 also includes a battery 609 connected to a power bus (not shown) to power the transceiver 605, the controller 601, the ADC 611, the accelerometer 607, and the memory 603. The TMS 600 may be powered by other sources alternative to or in addition to the battery 609, such as an energy harvester or other power source.

In some embodiments, the TMS 600 may be configured to measure, estimate, or store a number of tire parameters related to rolling resistance, such as a tire velocity parameter, a tire pressure parameter, tire dimension data, a tire stiffness parameter, a slip angle parameter, a tire deformation parameter, a coefficient of rolling resistance parameter, a force of rolling resistance parameter. These parameters may be useful in determining the energy expenditure of the tire due to rolling resistance. In some examples, static parameters such as tire dimension data, one or more tire stiffness coefficients, and/or a slip angle parameter are programmed int the TMS 600 (e.g., into the memory 603 of the TMS 600) at manufacture or installation of the TMS. In other examples, dynamic parameters such as tire velocity, tire pressure, or tire deformation, may be measured or estimated based on TMS accelerometers and sensors. In some examples, the controller 601 of the TMS 600 is configured to transmit one or more parameters related to rolling resistance to another component of a tire monitoring system, such as a VCS (e.g., the VCS 400 of FIG. 4), a TCU (e.g., the TCU 500 of FIG. 5A), and a smart device (e.g., the smart device 580 of FIG. 5B) over a wireless bidirectional communications link.

In some embodiments, the controller 601 of the TMS 600 is configured to determine a linear tire velocity parameter for the tire. In an implementation, the controller 601 calculates the velocity parameter based on the angular velocity of the tire using data from the accelerometer 607. In this example, an accelerometric waveform is generated from raw accelerometric data, and the angular velocity can be expressed as the number of sampled accelerometric signals between like accelerometric waveform peaks divided by the sampling frequency. For example, the controller 601 can determine the number of sampled accelerometric signals between two entry area peaks and divide the number of sampled accelerometric signals by the sampling frequency to determine the angular velocity. The controller 601 can determine the linear tire velocity parameter as the product of the angular velocity of the tire and the radius of the tire (e.g., identified from tire dimension data stored in the memory 603 of the TMS 600 or received from the VCS 400). In some embodiments, the TMS 600 transmits the linear tire velocity parameter to another component (e.g., the VCS 400, TCU 500, or smart device 580) using the above-described communications links. The linear tire velocity parameter may be useful to another component that calculates other tire parameters related to rolling resistance, and thus the energy expenditure of the tire.

In some embodiments, the controller 601 of the TMS 600 is configured to determine a tire pressure parameter and a tire temperature parameter by measuring tire pressure and tire temperature. In a particular embodiment, the TMS 600 is configured with an integrated pressure sensor and an integrated temperature sensor. In this embodiment, the TMS 600 may act as a tire pressure monitoring system (TPMS) sensor that is configured to measure tire pressure and tire temperature a provide a tire pressure parameter and tire temperature parameters to a tire pressure monitoring system, the VCS 400, the TCU 500, or the smart device 580. In other embodiments, the TMS 600 receives a tire pressure parameter and a tire temperature parameter from communicatively coupled sensors such as a valve-mounted TPMS sensor. In some embodiments, the TMS 600 transmits tire pressure parameter to another component (e.g., the VCS 400, TCU 500, or smart device 580) using the above-described communications links. The tire pressure parameter may be useful to another component that calculates other tire parameters related to rolling resistance, and thus the energy expenditure of the tire.

In some embodiments, the controller 601 of the TMS 600 is configured to determine a tire deformation parameter. In these embodiments, controller 601 of the TMS 600 measures a value for tire deformation such as peak radial displacement or contact patch length using accelerometric data from one or more accelerometers (e.g., a radial accelerometer) of the TMS. For example, contact patch length may be estimated by measuring the time at which the radial acceleration is returning to and is at zero g. This time is then expressed as a quotient/ratio of the time for a complete rotation, and the contact patch length is derived from its ratio of the known tire circumference. For example, tire dimension data such as radius, diameter, or circumference may be programmed into a memory of the TMS 600 at manufacture or installation. In some examples, in order to determine the peak radial displacement, the radial accelerometric signal may be integrated twice with respect to time. In some examples, the peak radial displacement may be determined from the effective rolling radius compared to a reference radius (e.g., programmed into the TMS at manufacture or installation), where the effective rolling radius is expressed as a quotient of linear velocity and angular velocity. For example, linear velocity of the tire may be determined from GPS doppler data and provided to the TMS 600 by a VCS, TCU or smart device through a bidirectional communications link. In some embodiments, the TMS 600 transmits a tire deformation parameter (i.e., a peak radial displacement parameter or a contact patch length parameter) to another component (e.g., the VCS 400, TCU 500, or the smart device 580) using the above-described communications links. The tire deformation parameter may be useful to another component that calculates other tire parameters related to rolling resistance, and thus the energy expenditure of the tire.

In some embodiments, the controller 601 of the TMS 600 is configured to determine a tire load parameter based in part on a tire deformation parameter generated by TMS; determine a coefficient of rolling resistance based in part on a tire pressure measurement and a tire velocity measurement; and determine, based on the tire load parameter and the coefficient of rolling resistance, a force of rolling resistance parameter. For example, the controller 601 may include a processor configured to carry out these steps through the execution of processor-executable instructions stored in the memory 603 of the TMS. In another example, the controller 601 may include an integrated circuit embedded with logic blocks configured to carry out these steps.

In some embodiments, the controller 601 of the TMS 600 is configured to determine a tire load parameter based on a tire deformation parameter, such as a peak radial displacement and/or contact patch length, as discussed above. In these embodiments, the controller 601 is configured to calculate a tire load parameter based on a deformation of the tire at a road contact surface, one or more stiffness coefficients, and one or more tire characteristics such a tire pressure. For example, a characteristic equation may be used to calculate a tire load parameter by accepting, as inputs to the equation, a measured radial deformation (e.g., peak radial displacement), the stiffness coefficients, and the one or more tire characteristics. In some examples, the one or more tire characteristics may include a temperature of the tire, a pressure of the tire, and/or a velocity of the tire, any of which may be determined by the TMS 600 as discussed above or may be received from other tire monitoring system components such as the VCS 400. In some examples, the one or more stiffness coefficients may be stored in the TMS 600 at manufacture or TMS installation in the tire, or may be received from the VCS 400 or other component, as described above. In some embodiments, the TMS 600 transmits the tire load parameter to another component (e.g., VCS 400, TCU 500, or smart device 580) using the above-described communications links. The tire load parameter may be useful to another component that calculates other tire parameters related to rolling resistance, and thus the energy expenditure of the tire and/or tire operating efficiency.

In some embodiments, the controller 601 is configured to calculate the coefficient of rolling resistance using a characteristic equation, such as Equation 3 above. In these embodiments, the controller 601 supplies a tire pressure parameter as an input to the characteristic equation for the coefficient of rolling resistance. In some examples, the controller 601 identifies a tire pressure parameter measured by the TMS 600 itself, as discussed above. In other examples, the controller 601 identifies a tire pressure parameter that is received from the VCS 400 as measured by other sensors or received directly from other sensors (e.g., valve-mounted tire pressure sensors, etc.). In these implementations, the controller 601 supplies a velocity parameter as an input to the characteristic equation for the coefficient of rolling resistance. In some examples, the controller 601 utilizes a velocity parameter that is calculated by the TMS 600 itself, as discussed above. In other examples implementation, the TMS 600 receives a velocity parameter from another component such as the VCS 400, the TCU 500, or the smart device 580. For example, the VCS 400, TCU 500, or smart device 580 may determine the linear velocity of the wheel center may be based on Global Positioning System (GPS) doppler data and supply a velocity parameter based on the measured linear velocity to the TMS 600. As another example, the VCS 400 may determine the angular velocity of the wheel based on data from a wheel speed sensor 411 and supply a velocity parameter to the TMS 600. In some implementation, the characteristic equation for the coefficient of rolling resistance is stored in the memory 603 of the TMS 600 at manufacture or is later received from the VCS 400. In some examples, the memory 603 stores multiple characteristic equations for the coefficient of rolling resistance, where different characteristic equations correspond to different road conditions. In one example, the VCS 400 supplies the TMS 600 with information relating to the current road conditions. In some embodiments, the TMS 600 transmits a coefficient of rolling resistance parameter to another component (e.g., VCS 400, TCU 500, or smart device 580) using the above-described communications links. The coefficient of rolling resistance parameter may be useful to another component that calculates other tire parameters related to rolling resistance.

In some embodiments, the controller 601 is configured to determine a force of rolling resistance parameter. In these embodiments, the controller 601 calculates the force of rolling resistance, for example, using Equation 2 above. In these implementations, the controller 601 calculates the product of the tire load parameter and the coefficient of rolling resistance parameter. In some embodiments, the TMS 600 transmits a force of rolling resistance parameter to another component (e.g., the VCS 400, TCU 500, or smart device 580) using the above-described communications links. The force of rolling resistance parameter may be useful to another component that calculates an efficiency parameter.

In some embodiments, the controller 601 is configured to determine an efficiency parameter indicative of at least one of an energy consumption parameter and a tire operating efficiency parameter based on the force of rolling resistance. In these embodiments, the controller 601 may determine an efficiency parameter by calculating the energy expended, or work performed, by the tire by calculating the product of the force of rolling resistance and a linear distance traveled as demonstrated in Equation 1 above. As discussed above, the linear distance traveled may be determined from the circumference of the tire and a particular number of revolutions. In some embodiments, the controller 601 may determine an efficiency parameter by calculating a tire operation efficiency. In some examples, to determine tire operating efficiency, the TMS utilizes reference values for tire operating parameters to determine a tire operating efficiency based on measured or estimated values for tire operating or rolling resistance parameters. These reference values may be stored in a memory of the TMS at manufacture or installation in the tire. In some embodiments, the TMS 600 transmits an efficiency parameter such as an energy expenditure parameter or tire operating efficiency parameter to another component (e.g., VCS 400, TCU 500, or smart device 580) using the above-described communications links. The energy expenditure parameter and/or tire operating efficiency parameter may be useful to another component that calculates an electric vehicle range.

In some embodiments, the TMS 600 is configured to provide some or all of the tire parameters related to rolling resistance discussed above to another component such as the VCS 400, the TCU 500, or the smart device 580. In one example, the TMS 600 provides the force of rolling resistance parameter to another component, which determines an efficiency parameter such as an energy expenditure or tire operating efficiency parameter based on the force of rolling resistance parameter. In another example, the TMS 600 provides the coefficient of rolling resistance parameter and the tire load parameter to another component, which determines the force of rolling resistance based on the coefficient of rolling resistance parameter and the tire load parameter provided by the TMS 600, and then determines the energy expenditure or tire operating efficiency. In another example, the TMS 600 provides the tire load parameter to another component, which calculates the coefficient of rolling resistance based on tire pressure and velocity parameters obtained from other sensors. In addition to tire parameters related to rolling resistance, the TMS 600 may provide other tire parameters such as a TMS identifier, a tire identifier (e.g., manufacturer make and model), manufacturer specifications for tire dimension (e.g., radius, circumference, width, aspect ratio, tread depth), a tire stiffness parameter, a tire mass parameter, a slip angle parameter, and the like that may be stored in the memory 603 of the TMS 600.

Although the calculations and determinations for tire parameters related to rolling resistance are described as being determined by the controller 601 of the TMS 600, it is understood that some of these calculations for tire parameters set forth above may be performed at least in part by the VCS 400. Furthermore, although the TMS 600 is discussed interacting with a VCS 400, it is understood that similar functionality may be achieved by communicating with a telematics control unit (e.g., the TCU 500 of FIG. 5A) or a smart device (e.g., the smart device 580 of FIG. 5B).

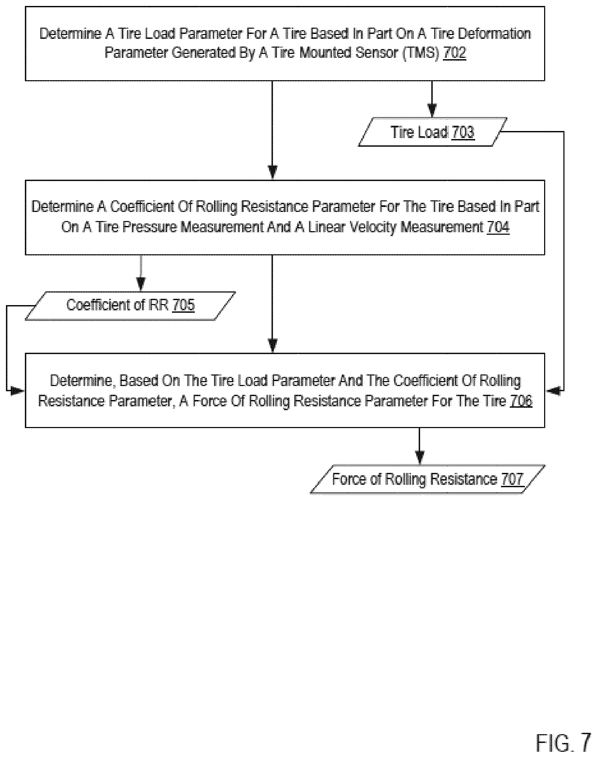

For further explanation, FIG. 7 sets forth a flow chart illustrating an exemplary method for estimating a tire operating efficiency and range of an electric vehicle according to embodiments of the present disclosure that includes determining 702 a tire load parameter 703 for a tire based in part on a tire deformation parameter generated by a tire mounted sensor (TMS). In various examples, determining 702 the tire load parameter 703 may be carried out by a TMS (e.g., the TMS 600 of FIG. 6), by a vehicle-based control unit (e.g., the VCS 400 of FIG. 4 or the TCU 500 of FIG. 5A), or by a portable electronic device (e.g., the smart device 580 of FIG. 5B). In these examples, a TMS measures a value for tire deformation such as peak radial displacement or contact patch length using accelerometric data from one or more accelerometers (e.g., a radial accelerometer) of the TMS. For example, contact patch length may be estimated by measuring the time at which the radial acceleration is returning to and is at zero g. This time is then expressed as a quotient/ratio of the time for a complete rotation, and the contact patch length is derived from its ratio of the known tire circumference. For example, tire dimension data such as radius, diameter, or circumference may be programmed into a memory of the TMS at manufacture or installation. In some examples, in order to determine the peak radial displacement, the radial accelerometric signal may be integrated twice with respect to time. In some examples, the peak radial displacement may be determined from the effective rolling radius compared to a reference radius (e.g., programmed into the TMS at manufacture or installation), where the effective rolling radius is expressed as a quotient of linear velocity and angular velocity. For example, linear velocity of the tire may be determined from GPS doppler data and provided to the TMS by a VCS, TCU or smart device through a wireless bidirectional communications link. In another example, the linear velocity may be determined by determining a rotational time period (e.g., a time between road strikes based on accelerometric waveforms) and dividing the circumference of the tire (e.g., programmed into the TMS at manufacture or installation) by the rotational time period. In some examples, the circumference of the tire may be compensated for tread wear using well-known tread wear estimation techniques. For tire load estimation, determining a tire load from contact path length and determining a tire load from peak radial displacement may be employed independently.

In some examples, the tire load parameter 703 may be calculated using a characteristic equation for tire load as a function of tire deformation (i.e., contact patch length or peak radial displacement), or determined from a lookup table for tire load corresponding to an identified contact tire deformation value. A characteristic equation may be stored in a memory or retrieved from a remote server or cloud-based information service using tire identification data stored on the TMS. In further examples, tire load may be compensated by a measured tire pressure using one or more tire stiffness coefficients. In one example, tire load is estimated by determining the degree of tire deformation and proportioning the degree of deformation due to measure tire pressure and an amount due to actual tire load. For example, where the tire load coefficient is expressed as Newtons per millimeter for a given pressure, the tire load may be determined as the product of the tire stiffness coefficient and the amount of tire deformation. A characteristic equation for tire load as a function of tire deformation, tire pressure, and a stiffness coefficient may be stored in a memory or retrieved from a remote server or cloud-based information service using tire identification data stored on the TMS.

In some examples, the tire load parameter 703 may be further determined based on a load error factor to compensate for a tire load value derived from a characteristic equation. For example, the load error factor may be calculated using one or more other characteristic equations based on drive time, number of tire rotations since vehicle start or a lifetime of the tire, the temperature of the tire, etc. The load error factor may then be applied to the previously derived tire load parameter 703 to determine a more accurately calculated tire load parameter 703.

In some implementations, the TMS (e.g., the TMS 600 of FIG. 6) determines 702 the tire load parameter 703. In these implementations, a characteristic equation or lookup table for tire load based on tire deformation may be programmed into the memory of the TMS at manufacture or installation. As discussed above, the TMS determines a tire deformation parameter based on peak radial displacement or contact patch length. In some examples, one or more tire stiffness coefficients may be programmed into the memory of the TMS at manufacture or installation. In some examples, the TMS identifies a tire pressure measurement using an integrated pressure sensor. In other examples, the TMS obtains a tire pressure measurement from a communicatively coupled tire pressure sensor such as a valve-mounted TPMS. The TMS may transmit the determined tire load parameter 703 to a vehicle-based control unit (e.g., the VCS 400 of FIG. 4 or the TCU 500 of FIG. 5A) or a portable electronic device (e.g., the smart device 580 of FIG. 5B) using a wireless bidirectional communications link such as a Bluetooth communications protocol link. The TMS may transmit the tire load parameter 703 in response to a request or polling message, in response to a detected event, or at some predetermined time interval.

In some implementations, a VCS (e.g., the VCS 400 of FIG. 4) determines 702 the tire load parameter 703. In some examples, the VCS determines 702 the tire load parameter by identifying a tire load parameter 703 received from the TMS with TMS identification data. In other examples, the VCS determines 702 the tire load parameter 703 by calculating the tire load parameter 703. In these examples, the VCS receives a tire deformation parameter (e.g., contact patch length or peak radial displacement) from the TMS. In some examples, the VCS receives a characteristic equation and/or tire stiffness coefficient for estimating tire load from the TMS. In other examples, the VCS obtains the characteristic equation and/or tire stiffness coefficient for estimating tire load from a remote server or cloud-based information service using tire identification data provided by and stored on the TMS. In some examples, the VCS receives a tire pressure measurement for estimating tire load from the TMS. In other examples, the VCS receives a tire pressure measurement for estimating tire load from another sensor such as a valve-mounted TPMS. In one example, the VCS may receive the tire deformation parameter, characteristic equations, tire stiffness coefficient, and/or tire pressure from the TMS using a wireless bidirectional communications link such as a Bluetooth communications protocol link.

In some implementations, a TCU (e.g., the TCU 500 of FIG. 5A) determines 702 the tire load parameter 703. In some examples, the TCU determines 702 the tire load parameter by identifying a tire load parameter 703 received from the TMS with TMS identification data. In other examples, the TCU determines 702 the tire load parameter 703 by calculating the tire load parameter 703. In these examples, the TCU receives a tire deformation parameter (e.g., contact patch length or peak radial displacement) from the TMS. In some examples, the TCU receives a characteristic equation and/or tire stiffness coefficient for estimating tire load from the TMS. In other examples, the TCU obtains the characteristic equation and/or tire stiffness coefficient for estimating tire load from a remote server or cloud-based information service using tire identification data provided by and stored on the TMS. In some examples, the TCU receives a tire pressure measurement for estimating tire load from the TMS. In other examples, the TCU receives a tire pressure measurement for estimating tire load from another sensor such as a valve-mounted TPMS. In one example, the TCU may receive the tire deformation parameter, characteristic equations, tire stiffness coefficient, and/or tire pressure from the TMS using a bidirectional communications link such as a Bluetooth communications protocol link.

In some implementations, a smart device (e.g., the smart device 580 of FIG. 5B) determines 702 the tire load parameter 703. In some examples, the smart device determines 702 the tire load parameter by identifying a tire load parameter 703 received from the TMS with TMS identification data. In other examples, the smart device determines 702 the tire load parameter 703 by calculating the tire load parameter 703. In these examples, the smart device receives a tire deformation parameter (e.g., contact patch length or peak radial displacement) from the TMS. In some examples, the smart device receives a characteristic equation and/or tire stiffness coefficient for estimating tire load from the TMS. In other examples, the smart device obtains the characteristic equation and/or tire stiffness coefficient for estimating tire load from a remote server or cloud-based information service using tire identification data provided by and stored on the TMS. In some examples, the smart device receives a tire pressure measurement for estimating tire load from the TMS. In other examples, the smart device receives a tire pressure measurement for estimating tire load from another sensor such as a valve-mounted TPMS. In one example, the smart device may receive the tire deformation parameter, characteristic equations, tire stiffness coefficient, and/or tire pressure from the TMS using a bidirectional communications link such as a Bluetooth communications protocol link.

The method of FIG. 7 also includes determining 704 a coefficient of rolling resistance parameter 705 for the tire based in part on a tire pressure measurement and a linear velocity measurement. In various examples, determining 704 a coefficient of rolling resistance parameter 705 may be carried out by a TMS (e.g., the TMS 600 of FIG. 6), by a vehicle-based control unit (e.g., the VCS 400 of FIG. 4 or the TCU 500 of FIG. 5A), or by a portable electronic device (e.g., the smart device 580 of FIG. 5B). In these examples, the coefficient of rolling resistance may be determined using a characteristic equation (e.g., Equation 3) expressing the coefficient of rolling resistance as a function of tire pressure and linear velocity (e.g., the velocity of the vehicle or the velocity at the wheel center). Techniques for measuring or identifying a tire pressure parameter (e.g., measured by an TMS integrated pressure sensor or valve-mounted pressure sensor) are discussed above. Techniques for determining linear velocity (e.g., based on GPS data or based on accelerometric time period data and tire dimensions) are discussed above. The characteristic equation for the coefficient of rolling resistance can be stored in a memory. In some examples, multiple characteristic equations corresponding to different road conditions (e.g., wet or dry surfaces) are stored in a memory.

In some implementations, the TMS determines 704 the coefficient of rolling resistance parameter 705. In some examples, one or more characteristic equations for determining 704 the rolling resistance parameter 705 may be programmed into the TMS at manufacture or installation. In other examples, one or more characteristic equations for determining 704 the rolling resistance parameter 705 may be received from another component, such as a VCS, TCU, or smart device, through a wireless bidirectional communications link. In some examples, the linear velocity of the tire is determined by the TMS based on the radius of the tire (e.g., from tire dimension data programmed into the TMS at manufacture or installation) and the angular velocity of the tire (e.g., the rotational time period for one revolution based on a time between road strike events derived from accelerometric data). In some examples, a tire pressure measurement is taken by an integrated tire pressure sensor in the TMS. In other examples, the tire pressure measurement is obtained from a separate tire pressure sensor such as a valve-mounted TPMS. In some examples, the TMS receives a road condition parameter from the VCS for selecting a characteristic equation for the coefficient of rolling resistance that corresponds to that road condition.

In some implementations, a VCS (e.g., the VCS 400 of FIG. 4) determines 704 the coefficient of rolling resistance parameter 705. In some examples, the VCS determines 704 the coefficient of rolling resistance parameter 705 by identifying a coefficient of rolling resistance parameter 705 received from the TMS with TMS identification data. In other examples, the VCS determines 704 the coefficient of rolling resistance parameter 705 by calculating the coefficient of rolling resistance parameter 705. In these examples, the VCS calculates the coefficient of rolling resistance parameter 705 using a characteristic equation, a tire velocity parameter, and a tire pressure parameter. In some examples, the VCS receives one or more characteristic equations for determining the coefficient of rolling resistance from the TMS. In other examples, the VCS obtains one or more characteristic equations for determining the coefficient of rolling resistance from a remote server or cloud-based information service using tire identification data provided by and stored on the TMS. In some examples, the VCS receives a tire pressure measurement for determining the coefficient of rolling resistance from the TMS. In other examples, the VCS receives a tire pressure measurement for determining the coefficient of rolling resistance from another sensor such as a valve-mounted TPMS. In some examples, the VCS receives tire velocity measurement for determining the coefficient of rolling resistance from the TMS. In other examples, the VCS determines a vehicle (and thus tire) velocity from another source, such as GPS doppler data. In some examples, the VCS determines the tire velocity based on an angular velocity reported by a wheel speed sensor and a tire radius characteristic that is received from the TMS or obtained from a remote server or cloud-based information service using tire identification data received from the TMS.

In some implementations, a TCU (e.g., the TCU 500 of FIG. 5A) determines the coefficient of rolling resistance parameter 705. In some examples, the TCU determines 704 the coefficient of rolling resistance parameter 705 by identifying a coefficient of rolling resistance parameter 705 received from the TMS with TMS identification data. In other examples, the TCU determines 704 the coefficient of rolling resistance parameter 705 by calculating the coefficient of rolling resistance parameter 705. In these examples, the TCU calculates the coefficient of rolling resistance parameter 705 using a characteristic equation, a tire velocity parameter, and a tire pressure parameter. In some examples, the TCU receives one or more characteristic equations for determining the coefficient of rolling resistance from the TMS. In other examples, the TCU obtains one or more characteristic equations for determining the coefficient of rolling resistance from a remote server or cloud-based information service using tire identification data provided by and stored on the TMS. In some examples, the TCU receives a tire pressure measurement for determining the coefficient of rolling resistance from the TMS. In other examples, the TCU receives a tire pressure measurement for determining the coefficient of rolling resistance from another sensor such as a valve-mounted TPMS. In some examples, the TCU receives tire velocity measurement for determining the coefficient of rolling resistance from the TMS. In other examples, the TCU determines a vehicle (and thus tire) velocity from another source, such as GPS doppler data. In some examples, the TCU determines the tire velocity based on an angular velocity reported by a wheel speed sensor and a tire radius characteristic that is received from the TMS or obtained from a remote server or cloud-based information service using tire identification data received from the TMS.

In some implementations, a smart device (e.g., the smart device of FIG. 5B) determines the coefficient of rolling resistance parameter 705. In some examples, the smart device determines 704 the coefficient of rolling resistance parameter 705 by identifying a coefficient of rolling resistance parameter 705 received from the TMS with TMS identification data. In other examples, the smart device determines 704 the coefficient of rolling resistance parameter 705 by calculating the coefficient of rolling resistance parameter 705. In these examples, the smart device calculates the coefficient of rolling resistance parameter 705 using a characteristic equation, a tire velocity parameter, and a tire pressure parameter. In some examples, the smart device receives one or more characteristic equations for determining the coefficient of rolling resistance from the TMS or a VCS. In other examples, the smart device obtains one or more characteristic equations for determining the coefficient of rolling resistance from a remote server or cloud-based information service using tire identification data provided by and stored on the TMS. In some examples, the smart device receives a tire pressure measurement for determining the coefficient of rolling resistance from the TMS or a VCS. In other examples, the smart device receives a tire pressure measurement for determining the coefficient of rolling resistance from another sensor such as a valve-mounted TPMS. In some examples, the smart device receives tire velocity measurement for determining the coefficient of rolling resistance from the TMS or a VCS. In other examples, the smart device determines a vehicle (and thus tire) velocity from another source, such as GPS doppler data. In some examples, the smart device determines the tire velocity based on an angular velocity reported by the VCS and a tire radius characteristic that is received from the TMS or obtained from a remote server or cloud-based information service using tire identification data received from the TMS.

The method of FIG. 7 also includes determining 706, based on the tire load parameter 703 and the coefficient of rolling resistance parameter 705, a force of rolling resistance parameter 707 for the tire. In various examples, determining 706 a force of rolling resistance parameter 707 may be carried out by a TMS (e.g., the TMS 600 of FIG. 6), by a vehicle-based control unit (e.g., the VCS 400 of FIG. 4 or the TCU 500 of FIG. 5A), or by a portable electronic device (e.g., the smart device 580 of FIG. 5B). In these examples, the force of rolling resistance parameter 707 may be determined by calculating the product of the tire load parameter 703 and the coefficient of rolling resistance parameter 705 as expressed in Equation 2 above.

In some implementations, the TMS (e.g., the TMS 600 of FIG. 6) determines 706 the force of rolling resistance parameter based on a tire load parameter 703 and a coefficient of rolling resistance parameter 705 that are calculated by the TMS, as discussed above. In other implementations, one or both of the tire load parameter 703 and the coefficient of rolling resistance parameter 705 may be received from one or more other components, such as a VCS, TCU, or smart device, as also discussed above, through a wireless bidirectional communications link.

In some implementations, a VCS (e.g., the VCS 400 of FIG. 4) determines 706 the force of rolling resistance parameter 707. In some examples, the VCS determines 707 the force of rolling resistance parameter 705 by identifying a force of rolling resistance parameter 707 received from the TMS with TMS identification data. In other examples, the VCS determines 706 the force of rolling resistance parameter 707 by calculating the force of rolling resistance parameter 707 based on a tire load parameter 703 and the coefficient of rolling resistance parameter 705 that are calculated by the VCS, as discussed above, or received from the TMS. In some implementations, one or both of the tire load parameter 703 and the coefficient of rolling resistance parameter 705 may be received from the TMS, as also discussed above, through a wireless bidirectional communications link.

In some implementations, a TCU (e.g., the TCU 500 of FIG. 5A) determines 706 the force of rolling resistance parameter 707. In some examples, the TCU determines 707 the force of rolling resistance parameter 705 by identifying a force of rolling resistance parameter 707 received from the TMS with TMS identification data. In other examples, the TCU determines 706 the force of rolling resistance parameter 707 by calculating the force of rolling resistance parameter 707 based on a tire load parameter 703 and the coefficient of rolling resistance parameter 705 that are calculated by the TCU, as discussed above, or received from the TMS. In some implementations, one or both of the tire load parameter 703 and the coefficient of rolling resistance parameter 705 may be received from the TMS, as also discussed above, through a wireless bidirectional communications link.

In some implementations, a smart device (e.g., the smart device 580 of FIG. 5B) determines 706 the force of rolling resistance parameter 707. In some examples, the smart device determines 707 the force of rolling resistance parameter 705 by identifying a force of rolling resistance parameter 707 received from the TMS with TMS identification data. In other examples, the smart device determines 706 the force of rolling resistance parameter 707 by calculating the force of rolling resistance parameter 707 based on a tire load parameter 703 and the coefficient of rolling resistance parameter 705 that are calculated by the smart device, as discussed above, or received from the TMS. In some implementations, one or both of the tire load parameter 703 and the coefficient of rolling resistance parameter 705 may be received from the TMS, as also discussed above, through a wireless bidirectional communications link.

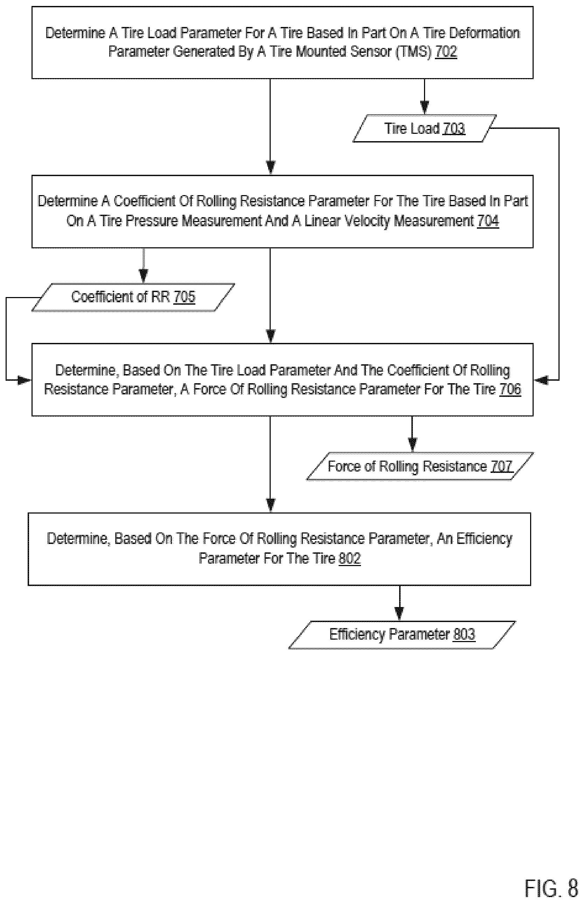

For further explanation, FIG. 8 sets forth a flow chart illustrating an exemplary method for estimating a tire operating efficiency and range of an electric vehicle according to embodiments of the present disclosure. Like the method of FIG. 7, the method of FIG. 8 also includes determining a tire load parameter for a tire based in part on a tire deformation parameter generated by a tire mounted sensor (TMS); determining a coefficient of rolling resistance parameter for the tire based in part on a tire pressure measurement and a linear velocity measurement; determining, based on the tire load parameter and the coefficient of rolling resistance parameter, a force of rolling resistance parameter for the tire. The method of FIG. 8 further includes determining 802, based on the force of rolling resistance parameter 707, an efficiency parameter 803 indicative of at least one of an energy consumption for the tire or an operating efficiency of the tire.

In various examples, determining 802 an efficiency parameter 803 may be carried out by a TMS (e.g., the TMS 600 of FIG. 6), by a vehicle-based control unit (e.g., the VCS 400 of FIG. 4 or the TCU 500 of FIG. 5A), or by a portable electronic device (e.g., the smart device 580 of FIG. 5B). In these examples, the efficiency parameter 803 may be determined by calculating energy consumption as the product of the force of rolling resistance parameter 707 and a distance parameter, as expressed in Equation 1 above. In some examples, the distance parameter may be determined by measuring the number of tire/wheel revolutions between two points and multiplying the number of revolutions by the circumference of the tire. In other examples, the distance parameter may be determined from GPS data. In these examples, the efficiency parameter 803 may also be determined by calculating a tire operating efficiency as a ratio of an expected tire operating parameters to actual tire operating parameter values that are measured or estimated as discussed above. The expected tire operating parameters may be expected values or reference values for tire parameters related to rolling resistance such as tire load, force of rolling resistance, energy consumption, etc., where the expected values correspond to normal or tested conditions.

In some implementations, the TMS (e.g., the TMS 600 of FIG. 6) determines 802 the efficiency parameter 803 by calculating an energy consumption of the tire or tire operating efficiency. In these implementations, to calculate energy consumption, the TMS determines the force of rolling resistance parameter 707 as discussed above. In some examples, the TMS determines the distance parameter based on the number of revolutions of the tire based on road strike events measured by an accelerometer and a reference tire circumference (or reference radius or diameter) that is programmed into the TMS at manufacture or installation. In some examples, to determine tire operating efficiency, the TMS utilizes reference values for tire operating parameters to determine a tire operating efficiency based on measured or estimated values for tire operating or rolling resistance parameters. These reference values may be stored in a memory of the TMS at manufacture or installation in the tire.

In some implementations, a VCS (e.g., the VCS 400 of FIG. 4) determines 802 the efficiency parameter 803. In some examples, the VCS determines the efficiency parameter 803 for a tire by identifying an energy consumption parameter or tire operating efficiency parameter that is received from a TMS with TMS identification data. In other examples, the VCS determines the energy efficiency parameter by calculating an energy consumption parameter based on the force of rolling resistance parameter 707 (which may be determined by the VCS as discussed above) and the distance parameter. In some examples, the VCS identifies a distance parameter received from the TMS with TMS identification data. In other examples, the VCS calculates the distance parameter based on the number of tire revolutions and a circumference of the tire. For example, the number of tire revolutions can be determined by a wheel speed sensor. The circumference (or radius or diameter) of the tire may be received from the TMS or retrieved from a remote sensor or cloud-based information service using tire identification data received from the TMS. In still further examples, the distance parameter may be determined from GPS data. In other examples, the VCS determines the efficiency parameter 803 by calculating a tire operating efficiency as a ratio of an expected tire operating parameters to actual tire operating parameter values that are measured or estimated as discussed above. The reference values for calculating tire efficiency may be obtained from the TMS or retrieved from a remote server or cloud-based information service using tire identification data received from the TMS.

In some implementations, a TCU (e.g., the TCU 500 of FIG. 5A) determines 802 the efficiency parameter 803. In some examples, the TCU determines the efficiency parameter 803 for a tire by identifying an energy consumption parameter or tire operating efficiency parameter that is received from a TMS with TMS identification data. In other examples, the TCU determines an efficiency parameter by calculating the energy consumption of the tire based on the force of rolling resistance parameter 707 (which may be determined by the TCU as discussed above) and the distance parameter. In some examples, the TCU identifies a distance parameter received from the TMS with TMS identification data. In other examples, the distance parameter may be determined from GPS data. In other examples, the TCU determines the efficiency parameter 803 by calculating a tire operating efficiency as a ratio of an expected tire operating parameters to actual tire operating parameter values that are measured or estimated as discussed above. The reference values for calculating tire efficiency may be obtained from the TMS or retrieved from a remote server or cloud-based information service using tire identification data received from the TMS.

In some implementations, a smart device (e.g., the smart device 580 of FIG. 5B) determines 802 the efficiency parameter 803. In some examples, the smart device determines the efficiency parameter 803 for a tire by identifying an energy consumption parameter or tire operating efficiency parameter that is received from a TMS with TMS identification data. In other examples, the smart device determines the efficiency parameter 803 by calculating the energy consumption of the tire based on the force of rolling resistance parameter 707 (which may be determined by the smart device as discussed above) and the distance parameter. In some examples, the smart device identifies a distance parameter received from the TMS with TMS identification data. In other examples, the distance parameter may be determined from GPS data. In other examples, the smart device determines the efficiency parameter 803 by calculating a tire operating efficiency as a ratio of an expected tire operating parameters to actual tire operating parameter values that are measured or estimated as discussed above. The reference values for calculating tire efficiency may be obtained from the TMS or retrieved from a remote server or cloud-based information service using tire identification data received from the TMS.

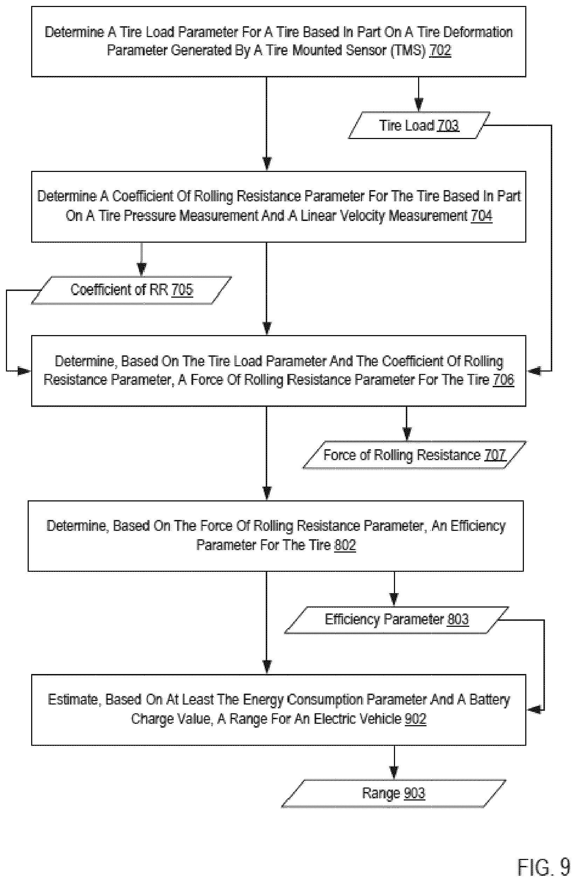

For further explanation, FIG. 9 sets forth a flow chart illustrating an exemplary method for estimating a tire operating efficiency and range of an electric vehicle according to embodiments of the present disclosure. Like the method of FIG. 8, the method of FIG. 9 also includes determining a tire load parameter for a tire based in part on a tire deformation parameter generated by a tire mounted sensor (TMS); determining a coefficient of rolling resistance parameter for the tire based in part on a tire pressure measurement and a linear velocity measurement; determining, based on the tire load parameter and the coefficient of rolling resistance parameter, a force of rolling resistance parameter for the tire; and determining, based on the force of rolling resistance parameter, an efficiency parameter indicative of at least one of an energy consumption for the tire and an operating efficiency of the tire.

The method of FIG. 9 further includes estimating 902, based on at least the energy consumption parameter 803 and a battery charge value, a range for an electric vehicle. In various examples, estimating 902 a range 903 for the electric vehicle may be carried out by a vehicle-based control unit (e.g., the VCS 400 of FIG. 4 or the TCU 500 of FIG. 5A) or by a portable electronic device (e.g., the smart device 580 of FIG. 5B). In some examples, the range 903 may be estimated by determining the energy consumption of a tire, as discussed above, for each tire of the vehicle. The sum of the energy consumption values may then be added to the energy consumption due to other resistive forces measured or estimated for the vehicle, such as drag or other aerodynamic forces, internal forces of friction, and vehicle inertia. The vehicle energy consumption due to resistive forces per a given distance may thus be determined. In some examples, the vehicle energy consumption per distance can then be compared to an existing charge on the electric vehicle's battery cells to determine a range of the electric vehicle based on current energy consumption due to resistive forces. For example, each battery cell in a battery pack may report its current charge to a battery controller coupled to, or integrated with, a VCS. In some implementations, the VCS determines the vehicle range based in part on the energy consumption of each tire and the remaining charge reported by the battery cells in the vehicle.

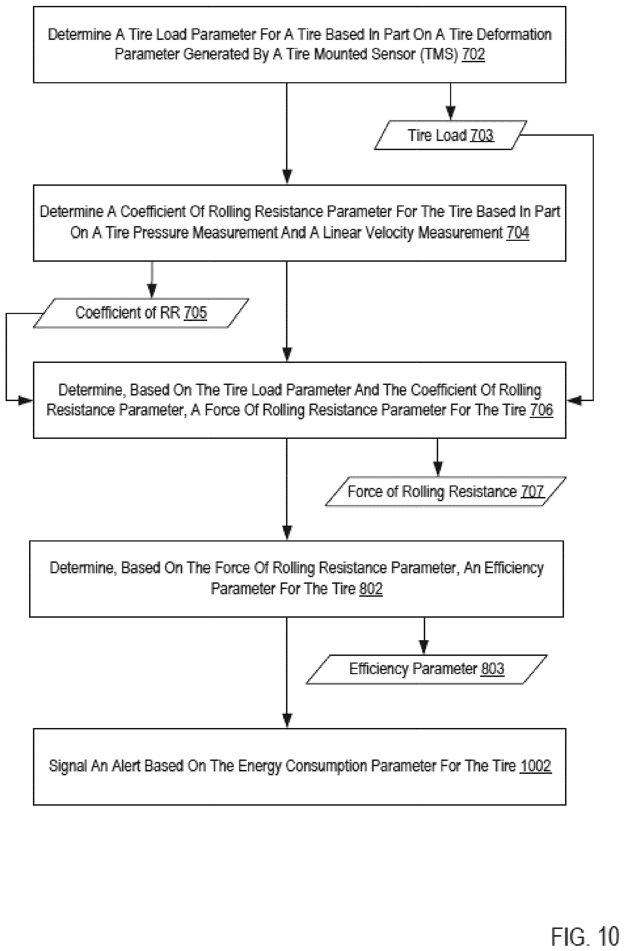

For further explanation, FIG. 10 sets forth a flow chart illustrating an exemplary method for estimating a tire operating efficiency and range of an electric vehicle according to embodiments of the present disclosure. Like the method of FIG. 8, the method of FIG. 10 also includes determining a tire load parameter for a tire based in part on a tire deformation parameter generated by a tire mounted sensor (TMS); determining a coefficient of rolling resistance parameter for the tire based in part on a tire pressure measurement and a linear velocity measurement; determining, based on the tire load parameter and the coefficient of rolling resistance parameter, a force of rolling resistance parameter for the tire; and determining, based on the force of rolling resistance parameter, an efficiency parameter indicative of at least one of an energy consumption for the tire and an operating efficiency of the tire.

The method of FIG. 10 further includes signaling 1002 an alert based on the energy consumption parameter for the tire. In various examples, signaling 1002 an alert based on the energy consumption parameter 803 for the tire may be carried out by a vehicle-based control unit (e.g., the VCS 400 of FIG. 4 or the TCU 500 of FIG. 5A) or by a portable electronic device (e.g., the smart device 580 of FIG. 5B). In some implementations, an alert is signaled when the energy consumption of the tire exceeds a predetermined threshold value or the operating efficiency of the tire falls below a predetermined threshold. In some implementations, an alert is signaled when the energy consumption of the tire exceeds the energy consumption of other tires by a predetermined threshold amount or the operating efficiency of the tire differs from the operating efficiency of other tires by a threshold degree. In various examples, the alert may be signaled by a visual indicator on a vehicle display, smart device display, or instrument panel; by an audio alarm; by a text message to a user device; and/or by an email. In some implementations, the alert suggests changing the tire pressure/load to enhance tire/vehicle efficiency. For example, information may be provided on a vehicle display, or in a message sent to a user through a connected smart device or messaging platform, indicating the efficiency can be improved by changing the tire pressure or tire load. In some implementations, a tire and/or vehicle operational efficiency rating is provided, for example, on a vehicle display or in a message may be sent to a user through a connected smart device or messaging platform.

In view of the explanations set forth above, readers of skill in the art will recognize that the benefits of estimating a tire operating efficiency and range of an electric vehicle according to embodiments of the present disclosure include, but are not limited to:

- The rolling resistance force or energy consumption for each tire is provided, thus indicating the overall vehicle rolling resistance or energy consumed as well as whether one or more tires is excessively energy consumptive.
- Using the vehicle rolling resistance as an input, improved techniques for determining the range of an electric vehicle are realized.
- By alerting the driver/user if one of these inputs exceeds a specified threshold, or if one tire is contributing excessively to the overall vehicle rolling resistance, the vehicle range can be improved and battery lifespan prolonged.

Exemplary embodiments of the present invention are described largely in the context of a fully functional system for estimating a tire operating efficiency and range of an electric vehicle. Readers of skill in the art will recognize, however, that the present invention also may be embodied in a computer program product disposed upon computer readable storage media for use with any suitable data processing system. Such computer readable storage media may be any storage medium for machine-readable information, including magnetic media, optical media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps of the method of the invention as embodied in a computer program product. Persons skilled in the art will recognize also that, although some of the exemplary embodiments described in this specification are oriented to software installed and executing on computer hardware, nevertheless, alternative embodiments implemented as firmware or as hardware are well within the scope of the present invention.

The present invention may be a system, an apparatus, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatuses, or other devices to cause a series of operational steps to be performed on the computer, other programmable apparatuses or other devices to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, apparatuses, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

It will be understood from the foregoing description that modifications and changes may be made in various embodiments of the present disclosure without departing from its true spirit. The descriptions in this specification are for purposes of illustration only and are not to be construed in a limiting sense. The scope of the present disclosure is limited only by the language of the following claims.

**Claims**

1. A method of estimating a tire operating efficiency and range of an electric vehicle, the method comprising:

   determining a tire load parameter for a tire based in part on a tire deformation parameter generated by a tire mounted sensor (TMS);
   determining a coefficient of rolling resistance parameter for the tire based in part on a tire pressure measurement and a linear velocity measurement; and
   determining, based on the tire load parameter and the coefficient of rolling resistance parameter, a force of rolling resistance parameter for the tire.

2. The method of claim 1or the apparatus of claim 10, wherein at least one of the tire pressure measurement and the linear velocity measurement is measured by the TMS.

3. The method of claim 1 or the apparatus of claim 10, wherein the TMS calculates one or more of the tire load parameter, the coefficient of rolling resistance parameter, and the force of rolling resistance.

4. The method of claim 1 or the apparatus of claim 10, wherein a vehicle-based control unit calculates one or more of the tire load parameter, the coefficient of rolling resistance parameter, and the force of rolling resistance.

5. The method of claim 1or the apparatus of claim 10, wherein a smart device calculates one or more of the tire load parameter, the coefficient of rolling resistance parameter, and the force of rolling resistance.

6. The method of claim 1 or the apparatus of claim 10, wherein the TMS provides the tire load parameter to at least one of a vehicle-based control unit and a smart device over a bidirectional communications link.

7. The method of claim 1, further comprising:
   determining, based on the force of rolling resistance parameter, an energy efficiency parameter indicative of at least one of an energy consumption for the tire and an operating efficiency of the tire.

8. The method of claim 7, further comprising:
   estimating, based on at least the efficiency parameter and a battery charge value, a range for an electric vehicle.

9. The method of claim 7 further comprising:
   signaling an alert based on the efficiency parameter for the tire.

10. An apparatus for estimating a tire operating efficiency and range of an electric vehicle, the apparatus comprising:

    a controller;
    a memory coupled to the controller, the memory storing one or more tire parameters; and
    a wireless transceiver coupled to the controller;
    wherein the controller is configured to:

       determine a tire load parameter for a tire based in part on a tire deformation parameter generated by a tire mounted sensor (TMS);
       determine a coefficient of rolling resistance parameter for the tire based in part on a tire pressure measurement and a linear velocity measurement; and
       determine, based on the tire load parameter and the coefficient of rolling resistance parameter, a force of rolling resistance parameter for the tire.

**11.** The apparatus of claim 10, wherein the controller is further configured to:
determine, based on the force of rolling resistance parameter, an energy efficiency parameter indicative of at least one of an energy consumption for the tire and an operating efficiency of the tire.

**12.** The apparatus of claim 11, wherein the controller is further configured to:
estimate, based on at least the efficiency parameter and a battery charge value, a range for an electric vehicle.

**13.** The apparatus of claim 11, wherein the controller is further configured to:
signal an alert based on the efficiency parameter for the tire.

**14.** A system for estimating a tire operating efficiency and range of an electric vehicle, the system comprising:

a tire mounted sensor (TMS) configured to:

identify one or more tire parameters, wherein the one or more tire parameters include at least a tire load parameter and a tire pressure parameter; and
transmit the one or more tire parameters over a wireless bidirectional communications link; and

a vehicle control system (VCS) configured to:

receive the one or more tire parameters from the TMS over the wireless bidirectional communications link;
determine, based on the one or more tire parameters, a force of rolling resistance for a tire;
determine, based on the force or rolling resistance, an efficiency parameter indicative of at least one of an energy consumption for the tire and an operating efficiency of the tire; and
estimate, based in part on the efficiency parameter, a range of an electric vehicle.

**15.** The system of claim 14, wherein the one or more tire parameters further includes at least one of a tire dimension parameter, a tire stiffness parameter, and a linear velocity parameter.

FIG. 1A

100

109

103

105

140

101

105

103

Vehicle Control System (VCS) 107

Vehicle Sensors 113

103

105

Tire Monitoring Sensor (TMS) 105    Tire 103

105

103

FIG. 1B

105

103

103

100

101

103

113

107

113

103

103

105

FIG. 2

103

105

Contact Patch

FIG. 3A

Radial
Displacement

Contact Patch
Length

FIG. 3B

FIG. 3C

FIG. 3D

VCS 400

Cellular/
Satellite
Transceiver
407

Memory
403

Controller
401

TMS
Transceiver
405

Control Area
Network
Interface
409

Wheel Speed
Sensor
411

Yaw Rate
Sensor
413

Inclination
Sensor
415

Other Sensors
417

FIG. 4

TCU 500

GPS Receiver
557

Memory
503

Controller
501

TMS
Transceiver
505

Inertial
Measurement
Unit
559

OBD Interface
561

Power
Interface
563

FIG. 5A

FIG. 5B

TMS 600

Memory 603

Signal Capture Parameters 621

Sampling Rates 622

Windowing Functions 623

Filters 624

Accelerometric Data 625

Tire Feature Data 626

Reference Data 627

Transceiver 605

Controller 601

ADC 611

Accelerometer 607

Battery 609

FIG. 6

```
┌─────────────────────────────────────────────────────────────────────┐
│ Determine A Tire Load Parameter For A Tire Based In Part On A Tire     │
│ Deformation Parameter Generated By A Tire Mounted Sensor (TMS) 702     │
└─────────────────────────────────────────────────────────────────────┘
                                              │
                                              ▼
                                    ╱ Tire Load 703 ╱
                                              │
        ┌─────────────────────────────────────────────────────────────┐
        │ Determine A Coefficient Of Rolling Resistance Parameter For    │
        │ The Tire Based In Part On A Tire Pressure Measurement And A     │
        │ Linear Velocity Measurement 704                                 │
        └─────────────────────────────────────────────────────────────┘
                    │
                    ▼
        ╱ Coefficient of RR 705 ╱
        ┌─────────────────────────────────────────────────────────────┐
        │ Determine, Based On The Tire Load Parameter And The             │
        │ Coefficient Of Rolling Resistance Parameter, A Force Of Rolling │
        │ Resistance Parameter For The Tire 706                           │
        └─────────────────────────────────────────────────────────────┘
                              │
                              ▼
                    ╱ Force of Rolling Resistance 707 ╱
```

FIG. 7

Determine A Tire Load Parameter For A Tire Based In Part On A Tire Deformation Parameter Generated By A Tire Mounted Sensor (TMS) 702

Tire Load 703

Determine A Coefficient Of Rolling Resistance Parameter For The Tire Based In Part On A Tire Pressure Measurement And A Linear Velocity Measurement 704

Coefficient of RR 705

Determine, Based On The Tire Load Parameter And The Coefficient Of Rolling Resistance Parameter, A Force Of Rolling Resistance Parameter For The Tire 706

Force of Rolling Resistance 707

Determine, Based On The Force Of Rolling Resistance Parameter, An Efficiency Parameter For The Tire 802

Efficiency Parameter 803

FIG. 8

Determine A Tire Load Parameter For A Tire Based In Part On A Tire Deformation Parameter Generated By A Tire Mounted Sensor (TMS) 702

Tire Load 703

Determine A Coefficient Of Rolling Resistance Parameter For The Tire Based In Part On A Tire Pressure Measurement And A Linear Velocity Measurement 704

Coefficient of RR 705

Determine, Based On The Tire Load Parameter And The Coefficient Of Rolling Resistance Parameter, A Force Of Rolling Resistance Parameter For The Tire 706

Force of Rolling Resistance 707

Determine, Based On The Force Of Rolling Resistance Parameter, An Efficiency Parameter For The Tire 802

Efficiency Parameter 803

Estimate, Based On At Least The Energy Consumption Parameter And A Battery Charge Value, A Range For An Electric Vehicle 902

Range 903

FIG. 9

Determine A Tire Load Parameter For A Tire Based In Part On A Tire Deformation Parameter Generated By A Tire Mounted Sensor (TMS) 702

Tire Load 703

Determine A Coefficient Of Rolling Resistance Parameter For The Tire Based In Part On A Tire Pressure Measurement And A Linear Velocity Measurement 704

Coefficient of RR 705

Determine, Based On The Tire Load Parameter And The Coefficient Of Rolling Resistance Parameter, A Force Of Rolling Resistance Parameter For The Tire 706

Force of Rolling Resistance 707

Determine, Based On The Force Of Rolling Resistance Parameter, An Efficiency Parameter For The Tire 802

Efficiency Parameter 803

Signal An Alert Based On The Energy Consumption Parameter For The Tire 1002

FIG. 10

Europäisches
Patentamt

European
Patent Office

Office européen
des brevets

# EUROPEAN SEARCH REPORT

Application Number

EP 22 16 2655

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/217607 A1 (SINGH KANWAR BHARAT [US]) 6 August 2015 (2015-08-06) * abstract; claims 1-15; figures 1-26 * ----- | 1-15 | INV. G01L17/00 G01M17/02 B60C23/04 |
| A | Anonymous: "Rolling Resistance Equation and Calculator ¦ Engineers Edge ¦ www.engineersedge.com", , 26 November 2020 (2020-11-26), pages 1-3, XP055950710, Retrieved from the Internet: URL:https://web.archive.org/web/2020112621 0128/https://www.engineersedge.com/mechani cs_machines/rolling_resistance_13633.htm [retrieved on 2022-08-10] * the whole document * ----- | 1-15 | B60C23/06 B60W40/10 |
| A | EP 2 927 066 A1 (GOODYEAR TIRE & RUBBER [US]) 7 October 2015 (2015-10-07) * abstract; claims 1-12; figures 1-12 * * paragraph [0040] – paragraph [0041] * ----- | 1-15 | |
| A | SUYABODHA APIWAT: "A Relationship between Tyre Pressure and Rolling Resistance Force under Different Vehicle Speed", MATEC WEB OF CONFERENCES, vol. 108, 1 January 2017 (2017-01-01), page 12004, XP055950316, DOI: 10.1051/matecconf/201710812004 * the whole document * ----- -/-- | 1-15 | TECHNICAL FIELDS SEARCHED (IPC) G01L G01M B60C B60W |

The present search report has been drawn up for all claims

| Place of search | Date of completion of the search | Examiner |
|---|---|---|
| The Hague | 10 August 2022 | Moscelli, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 22 16 2655

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Sarrafan Kaveh ET AL: "Accurate range estimation for an electric vehicle including Accurate range estimation for an electric vehicle including changing environmental conditions and traction system efficiency changing environmental conditions and traction system efficiency", , 1 January 2017 (2017-01-01), pages 1-25, XP055950718, Retrieved from the Internet: URL:https://ro.uow.edu.au/cgi/viewcontent.cgi?referer=https://www.google.com/&httpsr edir=1&article=1211&context=eispapers1 [retrieved on 2022-08-10] * the whole document * ----- | 1-15 | |

TECHNICAL FIELDS SEARCHED (IPC)

The present search report has been drawn up for all claims

| Place of search | Date of completion of the search | Examiner |
|---|---|---|
| The Hague | 10 August 2022 | Moscelli, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 2655

This annex lists the patent family members relating to the patent documents cited in the above-mentioned European search report.
The members are as contained in the European Patent Office EDP file on
The European Patent Office is in no way liable for these particulars which are merely given for the purpose of information.

10-08-2022

| Patent document cited in search report | | Publication date | Patent family member(s) | | Publication date |
|---|---|---|---|---|---|
| US 2015217607 | A1 | 06-08-2015 | NONE | | |
| EP 2927066 | A1 | 07-10-2015 | EP | 2927066 A1 | 07-10-2015 |
| | | | US | 2015285712 A1 | 08-10-2015 |

EPO FORM P0459

For more details about this annex : see Official Journal of the European Patent Office, No. 12/82

**EP 4 060 307 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63163129